# EUROPEAN PATENT SPECIFICATION

(11) **EP 2 247 194 B1**
(45) Date of publication and mention of the grant of the patent: **31.08.2011**
(21) Application number: 09714154.3
(22) Date of filing: 27.02.2009
(51) Int. Cl.: A23L 1/22, A21D 2/00, A23L 1/314

(54) **FOOD PRODUCT WITH INHOMOGENEOUS TASTANT BULK DISTRIBUTION AND METHOD FOR MAKING SUCH FOOD PRODUCT**
NAHRUNGSMITTEL MIT INHOMOGENER GESCHMACKSSTOFFVERTEILUNG SOWIE VERFAHREN ZUR HERSTELLUNG EINES SOLCHEN NAHRUNGSMITTELS
PRODUIT ALIMENTAIRE PRÉSENTANT UNE DISTRIBUTION EN VRAC D'UN EXHAUSTEUR DE GOÛT NON HOMOGÈNE ET PROCÉDÉ DE FABRICATION D'UN TEL PRODUIT ALIMENTAIRE

(30) Priority: 29.02.2008 EP 08152157
(43) Date of publication of application: 10.11.2010
(73) Proprietor: CSM Nederland B.V., 1112 XE Diemen (NL)
(72) Inventor: STIEGER, Markus Alexander, 6721 DA Bennekom (NL); BULT, Johannes Hendrikus Franciscus, NL-3823 CS Amersfoort (NL); HAMER, Robert Jan, NL- 3133 AT Vlaardingen (NL); NOORT, Martijn Willem Jan, 3703 BV Zeist (NL)
(74) Representative: Swinkels, Bart Willem
(86) International application number: PCT/NL2009/050091
(87) International publication number: WO 2009/108057

(56) References cited:
- AU-B4- 2005 100 266
- US-A- 5 690 990
- US-B1- 6 312 741

## Description

### Field of the invention

The invention relates to a food product with an inhomogeneous distribution of a food component. The invention further relates to a method for making such food product. The invention also relates to the use of an inhomogeneous distribution of a food component in a food product.

### Background of the invention

The use of encapsulated products for making food products, especially baked goods, is for instance described in US6312741. US6312741 discloses that the preservation of certain food products entails the provision of an acidic environment to the product to provide stability against microbiological contamination. Food grade acids are typically used in baking formulations to provide an acidic environment to a baked good. US6312741 further indicates that the incorporation of food grade acids, however, presents problems for baked goods. When food acids are added to bread they have a negative effect on the proteins (gluten) in the bread, as well as on the chemical leavening system. Further according to US6312741, the addition of preservative acids to bread dough would also have a negative effect on the bread leavening system. A further negative effect according to US6312741 which occurs as a result of the dough having acidic properties is that the capacity of the dough to hold water is decreased. Therefore, US6312741 proposes a method and composition for providing bread dough an acid environment conducive to preserving antimicrobial ingredients after baking without deleteriously affecting the bread dough prior to baking. The ingredient is a monodispersed fumaric acid particulate having a mean particle size of from about 70 microns to about 140 microns which is encapsulated with a coating having a melting point within normal baking temperature. The method includes incorporating the coated monodispersed fumaric acid particulate into bread dough. Preferably, the bread dough composition is a tortilla dough composition.

Further, WO0074499 describes a low melt encapsulate with a narrow melting point range, a process to manufacture such a low melt encapsulate, and the use of such a low melt encapsulate in the production of foods. According to WO0074499, the use of a low melt vegetable oil has several advantages over conventional vegetable oil products, especially when used in food systems. In one embodiment, the low melt vegetable oil is a high laurate vegetable oil, and in particular, a canola high laurate vegetable oil. A food grade acid may for instance be encapsulated with a low melt oil, and the encapsulated acid may be used in the manufacture of low temperature meat products such as sausage. In another embodiment of WO0074499, a live culture of micro organisms is encapsulated using the low melt vegetable oil.

WO2008074606 describes a food composition is provided useful for decreasing the amount of sodium while maintaining a high perceived saltiness of said food composition. The food composition comprises a particulate phase and a soluble phase and a selective sodium distribution between said phases whereby the amount of sodium in the particulate phase is at least 4 wt%, more preferably at least 10 wt%, more preferably at least 15 wt% and most preferably at least 20 wt%, and preferably at most 99.99 wt%, more preferably at most 99 wt%, more preferably at most 90 wt%, most preferably at most 70 wt% by weight of the total amount of sodium in the particulate and soluble phase.

AU2005100266 relates to a shaped food product, particularly to a meat pie that has a particular configuration to provide various benefits and advantages both in eating the pie, but also in transportation, storage and warming.

### Summary of the invention

It has been found by the present inventors that an uneven distribution of tastants may provide specific sensory effects to the consumer. For instance, it has been observed that an inhomogeneous tastant bulk distribution in a food product can be used for enhancing and/or improving the sensory perception of the tastant in a food product. It has further been found that an inhomogeneous tastant bulk distribution in a food product can be used for providing a food product with a reduced tastant bulk weight percentage.

The present prior art does not provide or indicate a (suitable) method for providing an uneven distribution of food components in a food product, especially not of tastants. For instance, the prior art does not provide a method to lower for instance the salt content in a food product, although there is a desire to do so, especially with respect to sodium salts.

Hence, it is an aspect of the invention to provide an alternative method for the production of a food product, which preferably further obviates one or more of above-described drawbacks.

According to a first aspect, the invention provides a method for the production of a food product comprising a tastant, the food product having a tastant bulk weight percentage and an inhomogeneous tastant bulk distribution, wherein the method comprises:
a. combining a first portion of starting materials for making the food product and a second portion of starting materials for making the food product; and
b. (optionally further) preparing the food product,
wherein the first portion of starting materials further comprises the tastant with a first portion tastant weight percentage, wherein the second portion of starting materials further optionally comprises the tastant with a second portion tastant weight percentage, and wherein the second portion tastant weight percentage is in the range of about 0-75 % of the first portion tastant weight percentage, especially in the range of about 0-50 %, and wherein preferably the first portion of starting materials and the second portion of starting materials are, except for the tastant, substantially identical with respect to composition (of the respective portions). In this way, a composite food product may be obtained.

The term "portion" may also relate to a plurality of portions.

Thus, especially a method is provided for the production of a food product comprising a tastant, the food product having a mean tastant weight percentage and an inhomogeneous tastant distribution in the food product (i.e. inhomogeneous distribution in the bulk), wherein the method comprises:
a. combining a first portion of starting materials for making the food product and a second portion of starting materials for making the food product; and
b. (optionally further) preparing the food product,
wherein the first portion of starting materials further comprises the tastant with a first weight percentage (relative to the first portion), wherein the second portion of starting materials further optionally comprises the tastant with a second weight percentage (relative to the second portion), and wherein the second weight percentage is in the range of about 0-75 % of the first weight percentage, especially in the range of about 0-50 %.

Thereby, the first portion of starting materials and the second portion of starting materials are, except for the tastant, substantially identical with respect to composition (of the first and second portion, respectively.

Yet, to a further aspect, the invention also provides a method for preparing a food product comprising:
a. preparing a first portion of starting materials comprising a tastant with a first weight percentage relative to the first portion;
b. preparing a second portion of starting materials, optionally comprising the tastant with a second weight percentage relative to the second portion, wherein the second weight percentage is in the range of about 0-75 % of the first weight percentage, especially in the range of about 0-50 %;
c. combining the first portion and second portion to produce a food product;
d. optionally further processing the food product.

After combining (c) the first and second portion, an intermediate or final product may be obtained. After further processing (d) the food product, an intermediate (such as a pre-baked bread), or a final product (such as a bread) may be obtained.

Herein, the food product, obtained, either after combining (c) or after the optional further processing (d) may also be indicated as "composite food product".

The food product obtainable by the methods of the invention is especially characterized by distinct regions, also indicated as distinct bulk regions. The food product preferably comprises at least two bulk regions having different respective weight ratios of a tastant.

The first and the second portions are preferably combined in a weight ratio in the range of 1:20-20:1. Except for the tastant, the portions may further substantially be identical with respect to composition.

Both the "first portion of starting materials for making the food product" and "second portion of starting materials for making the food product" each independently may comprise the essential ingredients to make the food. However, since the first portion and the second portion have different tastant weight percentages, the combination of the portions may provide a food product with an inhomogeneous tastant bulk concentration.

Preferably, the first portion consists of a plurality of components (such as macro nutrients), each having a weight percentage relative to the first portion, and the second portion consists of a plurality of components (such as macro nutrients), each having a weight percentage relative to the second portion, and, preferably, the sum of overlapping weight percentages for the respective components for the first portion and the second portion is at least 50 wt.%, preferably 90 wt.%, even more preferably at least about 95 wt.% (this is herein also indicated as "identicality weight percentage"). Below, some examples are displayed.

According to a further aspect of the invention, there is provided a food product comprising a tastant, the food product having a tastant bulk weight percentage and an inhomogeneous tastant bulk distribution, wherein the food product comprises:
a. a first bulk region comprising the tastant, the first bulk region having a first bulk region tastant weight percentage; and
b. a second bulk region optionally comprising the tastant, the second bulk region having a second bulk region tastant weight percentage,
wherein the second bulk region tastant weight percentage is in the range of about 0-75 % of the first bulk region tastant weight percentage, and wherein preferably the first bulk region and the second bulk region each independently have a volume of at least about 1 mm³, respectively, and wherein preferably the first bulk region and the second bulk region are, except for the tastant, substantially identical with respect to composition.

Thus, especially a food product comprising a tastant, the food product having a mean tastant weight percentage and an inhomogeneous tastant distribution (i.e. of the tastant in the bulk of the food product), wherein the food product comprises:
a. a first region (in the bulk) comprising the tastant, the first region having a first tastant weight percentage (of that first region); and
b. a second region (in the bulk) optionally comprising the tastant, the second region having a second tastant weight percentage (of that second region),
wherein the second tastant weight percentage is in the range of about 0-75 % of the first tastant weight percentage, and wherein preferably the first region and the second region each independently have a volume of at least about 1 mm³, respectively.

Thereby, the first bulk region and the second bulk region may, except for the tastant, substantially be identical with respect to composition. As will be clear to a person skilled in the art, the food product may comprise a plurality of such first and second regions.

Herein, the tastant may especially comprise one or more tastants selected from the group consisting of bitter, sweet, sour, salty and umami tastants, more especially selected from the group consisting of sugars, sweeteners, salts, taste potentiators and acidulants. As will be clear to the person skilled in the art, the phrase "one or more tastants selected from the group consisting of..." may include combinations of two or more tastants, including combinations of different tastants within the same tastant category, such as a mixture of salts.

The tastant may also comprise a kokumi tastant. Hence, the tastant may especially comprise one or more tastants selected from the group consisting of bitter, sweet, sour, salty, kokumi, and umami tastants.

The invention also provides a food product comprising a tastant, wherein the tastant is inhomogeneously distributed in the bulk of the food product, wherein the food product comprises a first bulk region and a second bulk region, wherein the first bulk region comprises the tastant with a first weight percentage relative to the first bulk region, wherein the second bulk region optionally comprises the tastant with a second weight percentage relative to the second bulk region, wherein the second bulk region comprises the tastant with a second weight percentage in the range of 0-75% of the first weight percentage of the tastant in the first bulk region, and wherein the first bulk region and the second bulk region each independently have a volume of at least 1 mm³.

Herein, preferably the first bulk region and the second bulk region are, except for the tastant, substantially identical with respect to composition.

Preferably, the first bulk region consists of a plurality of components (such as macro nutrients), each having a weight percentage relative to the first bulk region, and the second bulk region consists of a plurality of components (such as macro nutrients), each having a weight percentage relative to the second bulk region, and, preferably, the sum of overlapping weight percentages for the respective components for the first bulk region and the second bulk region is at least 50 wt.%, preferably 90 wt.%, even more preferably at least about 95 wt.% (this is herein also indicated as "identicality weight percentage"). Below, some examples are displayed.

The more the bulk regions are identical, the more the organoleptic properties may be perceived the same; i.e. the consumer does not perceive an inhomogeneous product although there is a component, the tastant, inhomogeneously distributed.

As mentioned above, the food product may comprise a plurality of first bulk regions or a plurality of second bulk regions or a plurality of first bulk regions and a plurality of second bulk regions.

For instance, the food product is a mixed product. The food product may for instance be a kneaded food product, such as in an embodiment a (co-)extrudate. The food product may also comprise a laminate comprising alternating layers with different tastant weight percentages, wherein a second layer as second bulk region in contact with a first layer as first bulk region comprises the tastant with a second weight percentage in the range of 0-75% of the first weight percentage of the tastant in the first layer.

In a specific embodiment, the food product is selected from the group consisting of a flour based product (such as a dough or a bread, like a dough laminate or a (pre-baked) bread baked from a dough laminate), a cheese or a composite cheese product (such as laminated (and pressed) cheese product), a sausage or a reconstituted meat product (such as a sausage co-extrudate or laminate), a meat replacer (such as a meat replacer based on a laminated or co-extruded curd), a confectionery (such as a laminated confectionery), a non-frozen desert product (such as a laminated non-frozen dairy), a mashed-potato product (such as based on a extruded mashed-potato product).

For instance, bread as food product with salt as tastant, prepared according to the method of the invention may exhibit an inhomogeneous spatial distribution of salt which advantageously enhances the sensory perception of saltiness. By those means, the salt concentration in bread can be reduced without deteriorating the perception of saltiness.

Hence, according to a further aspect the invention provides the use of an inhomogeneous tastant bulk distribution in a food product for providing a food product with a reduced tastant bulk weight percentage. According to yet another aspect, the invention provides the use of an inhomogeneous tastant bulk distribution in a food product for enhancing and/or improving the sensory perception of the tastant in a food product.

Especially, inhomogeneities in the tastant content over length scales in the range of millimetres may provide the desired effect. Hence, in a preferred embodiment, in the food product there is a shortest distance between two bulk regions of the same type (such as two first bulk regions or two second bulk regions) measured through the intermediate bulk region of another type (such as a second bulk region or a first bulk regions, respectively) is in the range of 0.5-500 mm, preferably in the range of 0.5-100 mm, even more preferably 0.5-30 mm, such as especially 1-20 mm, yet even more preferably in the range of 1-10 mm.

### Brief description of the drawings

Embodiments of the invention will now be described, by way of example only, with reference to the accompanying schematic drawing in which corresponding reference symbols indicate corresponding parts, and in which:
Figure 1a-c schematically depict embodiments of a food product according to the invention; Figures 1a-1c show cross sections of the food product; and
Figure 2a schematically depicts a specific embodiment of a food product according to the invention, wherein the food product is bread. Figure 2a schematically depicts a slice of bread or a cross section of bread. Figure 2b schematically depicts a perspective view of a bread according to an embodiment of the invention.

### Description of preferred embodiments

### General

As mentioned above, the invention provides a method for the production of a food product comprising a tastant. The food product according to the invention, obtainable according to the method of the invention, has a tastant bulk weight percentage and an inhomogeneous tastant bulk distribution. This means that although the tastant is distributed unevenly, there is a mean tastant bulk weight percentage. The mean tastant bulk weight percentage in the food product, relative to the weight of the food product, is herein also indicated as "tastant bulk weight percentage". For some food products and for some tastants, the bulk weight percentage of the tastant may be defined by law.

The fact that the tastant is distributed unevenly throughout the food product does not exclude that on a smaller scale than the whole food product the tastant may be distributed evenly. For instance, in specific regions within the food product, the tastant distribution may substantially be homogeneous (see also below). However, there are regions in the food product that have different tastant bulk weight percentage than other regions in the food product. Therefore, the food product according to the invention has an inhomogeneous tastant bulk distribution.

The terms "bulk distribution" and "bulk weight percentage" are used to indicate that the uneven tastant distribution is at least present in the bulk of the food product. The term "bulk" is especially applied to distinguish over products that may have a tastant coating or a tastant particle coating. The latter coating may for instance be indicated as an "inhomogeneous tastant coating distribution". Although the product according to the invention may have such tastant coating or tastant particle coating, the product according to the invention at least comprises the herein described inhomogeneous tastant *bulk* distribution. The term "bulk" may in an embodiment also be interpreted as anything in the food product at a distance of about 0.2 mm, more especially at a distance of about 0.5 mm from the surface of the food product, even more especially at a distance of about 5 mm from the surface of the food product.

The food product according to the invention may especially be a baked food product, such as a baked dough product. Especially in such food products, good results may be obtained. It appears that e.g. an uneven salt distribution, according to an embodiment of the invention, may be used to trigger the salt perception of the consumer. For instance, the bread may appear to have a "normal" mean salt content (i.e. tastant bulk weight percentage), whereas the actual salt content is lower than the normal mean salt content. However, by applying the inhomogeneous salt distribution according to an embodiment of the invention, a "normal" mean salt content is perceived by the consumer.

However, the invention is not directed to bread products or other baked dough products only. The food product may comprise any food product, particularly a solid or semi-solid food product, more especially food products selected from the group consisting of bread, baked dough products, baked pastry products, pretzels, crackers, cookies, and biscuit.

In another embodiment, the food product may comprise a food product selected from the group consisting of confectionery (such as candies), nutritional bars, ice creams, mashed potatoes, mashed potato products, snacks (such as backed snacks and extruded snacks), processed cheese, processed meat products, and sausages. In yet another embodiment, the food product comprises cheese. The invention is especially directed to dough products, baked dough products (including pre-baked dough products), fried dough products and cooked dough products. Examples of (other) products are for instance Pringle type snacks, krupuk (also known as Kerupuk, Kroepoek or Keropok), Wokkel type snacks, French fries, crisps, croissants, puff pastry, etc. The food product may also comprise a dairy dessert, such as a frozen or non-frozen dairy dessert.

The term "food product" especially refers to a ready to eat food product.

### Method of the invention

The method of the invention comprises in an embodiment:
a. combining a first portion of starting materials for making the food product and a second portion of starting materials for making the food product; and
b. preparing the food product.

The terms "first portion of starting materials for making the food product" and "second portion of starting materials for making the food product" relate to portions or premixes that in its own would qualify to provide the food product (especially with an homogeneous bulk tastant distribution).

For instance, referring to a bread product, the first portion of starting materials for making the food product and second portion of starting materials for making the food product may both be dough, however, the portions having different tastant weight percentages.

Hence, a prior art system such as described in AU2005100266 does not relate to the present invention. The parts described there, such as the meat part and the pie part, are on their own not able to provide the food product, since the food product is the meat pie, and the pie part is only able to provide the pie and the meat part is only able to provide the meat.

In a specific embodiment, both the "first portion of starting materials for making the food product" and "second portion of starting materials for making the food product" each independently may comprise the essential ingredients to make the food product (with a homogenous bulk tastant distribution), but since the first portion of starting materials comprises the tastant with a first portion tastant weight percentage, and the second portion of starting materials further optionally comprises the tastant with a second portion tastant weight percentage, the combination of the "first portion of starting materials for making the food product" and "second portion of starting materials for making the food product" may provide a food product with an inhomogeneous tastant bulk concentration.

Hence, the first portion or the second portion will in an embodiment not consist of the tastant, but comprise also other ingredients. Hence, the tastant weight percentage in the first and in the second portion will in general independently be lower than about 90 wt.%, and in case of non-sweet tastants especially independently below about 50 wt.%, even more especially below about 30 wt.%, yet even more especially below about 10 wt.%, even more especially below about 5 wt.%, relative to the weight of the first or second portion, respectively. When more than one tastant is present in the first or the second portion, these numbers may apply to the sum of the weight percentage of the tastants in the first and the second portion, respectively.

In a specific embodiment, the "first portion of starting materials for making the food product" and "second portion of starting materials for making the food product" are substantially identical with respect to composition (i.e. starting material(s) or components (other than the tastant(s))) included in the respective portion. Where more than one starting material is contained in the composition preferably also the relative amounts of those starting materials in the respective portions), are substantially identical.

In a further embodiment, the "first portion of starting materials for making the food product" and "second portion of starting materials for making the food product" are substantially identical with respect to composition (i.e. starting material(s) and/or relative amounts of those starting materials in the respective portions) except for the tastant, and optionally except for one or more of the other optional starting materials selected from the group consisting of flavours, aromas, colouring agents, and seasonings, and optionally except for one or more of the starting materials selected from preservation agents and anti-bacterials, and optionally except for one or more of the starting materials selected from the group consisting of emulsifiers (such as Datems (Datems may be formed by reacting diacetyltartaric anhydride with partial glycerides of edible oils, fats or fat-forming fatty acids. Sources of glycerides for the production of Datems include soy oil, palm oil, sunflower oil, beef tallow and monoglycerides. Datems can also be obtained from commercial sources), mono- and diglycerides, lactylates, Citrems, Acetems, lecithins), enzymes (such as amylases, hemicellulases, cellulases, lipases, peroxidases, glucoseoxidases, lipoxigenases, proteases), and redox substances (such as ascorbic acid).

Hence, the first portion of starting materials and the second portion of starting materials (and optionally further portions of starting materials) are preferably substantially identical in composition, except for the tastant.

Emulsifiers, enzymes and redox substances, but for instance also the level of microbiological active species such as yeast, can be used to fine tune the morphology and/or rheological properties of the different regions obtained in the food product by performing the method of the invention (see also below).

Hence, each respective portion is able to be used as starting material to make the food product, but the respective portions differ in tastant weight percentage, and may further optionally differ in relative amounts of the starting materials (components) relative to each other and may further optionally differ with respect to less essential or non-essential components such as one or more selected from the group consisting of flavours, aromas, colouring agents, seasonings, preservation agents, anti-bacterials, emulsifiers, enzymes, redox substances, and yeast. Hence, in an embodiment, especially with bread as food product, bread flavours, spices, or herbs, may also be distributed inhomogeneously.

It is preferred that the protein, carbohydrate, and/or the fat weight percentage is substantially the same for the two portions. Further, it is especially preferred that the protein, carbohydrate, and/or fat composition in the two portions is substantially the same. Hence, the first and the second portions (and optionally further portions) preferably have substantially the same macro nutrient composition.

Macro nutrients can be defined as nutrients that the body uses in relatively large amounts: proteins, carbohydrates, and fats. This is as opposed to macro nutrients, which the body requires in smaller amounts, such as vitamins and minerals. Carbohydrates are for instance polysaccharides such as starch. Preferably, the polysaccharide is selected from the group consisting of a gum and a starch. Herein, optionally the starch may be modified.

It is especially preferred that the protein, starch, and/or the fat weight percentage is substantially the same for the two portions. Further, it is especially preferred that the protein, starch, and/or fat composition in the two portions is substantially the same. This may especially apply to dough products.

Therefore, preferably the type of one or more of the protein, carbohydrate (such as starch) and fat are substantially the same for the first and the second portions (and optionally also for further portions). Even more preferably, the weight percentages of protein, carbohydrate and fat are substantially the same.

The phrase "the first portion of starting materials for making the food product" and "second portion of starting materials for making the food product" are substantially identical with respect to composition (i.e. starting material(s) or components (other than the tastant(s))) included in the respective portion" may especially indicate that the relative amounts of the components in the respective portions (except for the tastant) are substantially the same.

Preferably, the composition (defined as sum of weight percentage(s) of the component(s)) of the first portion and the composition (defined as sum of weight percentage(s) of the component(s)) of the second portion, are substantially the same, preferably are identical for at least 80 wt.%, preferably at least 90 wt.%, even more preferably at least 95 wt.% ("identicality weight percentage"). In examples wherein the tastant is a bulk component, such as sugar (or another bulk sweetener, such as a polyol sweetener or a maltodextrine) in for instance candies, and such tastant is chosen as tastant with inhomogeneous distribution, these identicality values may be lower: however, preferably at least 50 wt.%, even more preferably at least 60 wt.%, even more preferably at least 65 wt.%, such as at least 70 wt.%.

For instance, assuming some first and second portions having the following compositions, the identicality of the compositions is determined as follows (the first portion is used as reference), for a bread-like example, a candy bar like example, two confectionery-like examples, a cheese-like example and a sausage-like example:

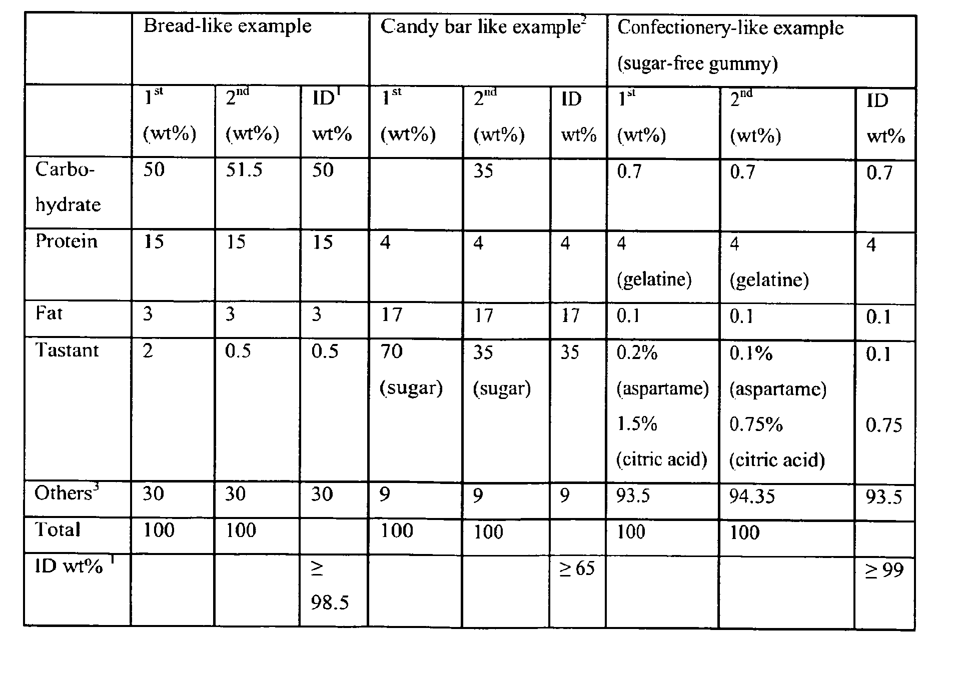

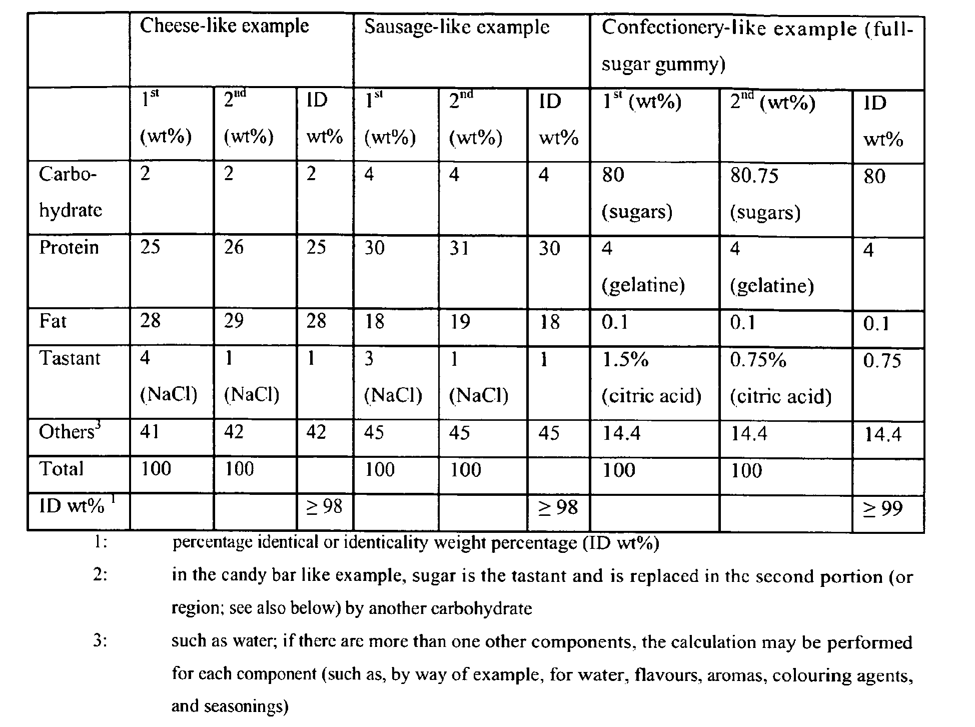

Optional others may be included in the identicality determination. Except for the example wherein the sugar content as tastant content is varied, all identicality wt.% are over 90 wt.%, or even over 95 wt.%. Except for the sugar-based systems, such as the candy bar like example and the full-sugar gummy, the identicality, even without the tastant, is over 90%, or even over 95 wt.%. Thus, the for the respective components, the overlapping weight percentages are determined, and are added to provide the identicality weight percentage.

With respect to the confectionery-like examples, it is noted that one example is related to a sugar-free confectionery, and the other example is related to a sugar-based confectionery. In the latter ("confectionery-like example (full-sugar gummy)"), by way of example, the distribution of the tastant citric acid is varied (i.e. is made inhomogeneous) whereas the sugar content is not substantially varied.

The term "except for the tastant" in relation to "substantial the same composition" may especially indicate that the composition (defined as sum of weight percentage(s) of the component(s)) of the first portion, including the tastant, and the composition (defined as sum of weight percentage(s) of the component(s)) of the second portion, including the tastant, are substantially the same, and are preferably identical for at least 80 wt.%, preferably at least 90 wt.%, even more preferably at least 95 wt.% ("identicality weight percentage").

However, in examples wherein the tastant is a bulk component, such as sugar (or another bulk sweetener, such as a polyol sweetener or a maltodextrine) in for instance candies, and such tastant is chosen as tastant with inhomogeneous distribution, these identicality values, including the tastant, may be lower: however, preferably at least 50%, even more preferably at least 60 wt.%, even more preferably at least 65 wt.%, such as at least 70 %. In those embodiments wherein sugar is a bulk component, such as for instance sugar for some confectionery, and wherein the sugar content differs between portions or regions, respectively, the identicality weight percentage may adapted to consider sugar and a (carbohydrate) bulk replacer as substantially identical. For instance, in the above example sugar may be replaced by xylitol or polydextrose. When considering for confectionery food products sugar and a carbohydrate bulk replacer as substantially identical, the identicality weight percentage for confectionery food products with sugar as bulk ingredient in the first region (or first portion, respectively), may also add up to values over 90 wt.%. Actually, in the above candy-bar like example, the weight percentage of sugar in the first portion (or region) is 70 wt.% and the weight percentages of sugar and of the carbohydrate that acts as bulk replacer of sugar in the second portion are together 70 wt.%. Hence, in this specific embodiment of confectionery, wherein the carbohydrate sugar bulk replacer is considered as substantially identical with sugar, the identicality weight percentage is even 100%.

The terms "first portion of starting materials for making the food product" and "second portion of starting materials for making the food product" do not exclude the use of other portions, and may also include the use of a plurality of substantially identical first portions and/or a plurality of substantially identical second portions. Preferably however, the number of first portions and second portions is limited. Even more preferably, there is only one first portion and one second portion of starting materials, and those portions are combined.

The first portion of starting materials for making the food product and the second portion of starting materials for making the food product differ at least in that the second portion tastant weight percentage is in the range of about 0-75 % of the first portion tastant weight percentage, especially in the range of about 10-75 %. Hence, the second portion may not include the tastant or may include the tastant in a tastant weight percentage in the order of up to about 75% of the first portion tastant weight percentage, especially in the order of up to about 50%. In this way, the difference in tastant level may be substantial enough to obtain for instance the effect that the bulk weight percentage of the tastant may be decreased, while maintaining the same subjective tastant (weight percentage) perception. Hence, the tastant may optionally be present in the second portion of starting materials. For a favourable overall taste perception, the tastant may be contained in both the first and the second portion of starting materials. Further, advantageously, having the tastant in both portions may also be favourable for the processing conditions/textural properties/rheological behaviour of the portions.

Preferably, the second portion tastant weight percentage is in the range of about 0-40 % of the first portion tastant weight percentage, more preferably in the range of about 0-25 % of the first portion tastant weight percentage. In a further embodiment, the tastant weight percentage in the second portion is at least 10 % of the tastant weight percentage of the first portion. The indication x% of the first portion weight percentage indicates for instance that the weight percentage of the tastant in the first portion is about 3 wt.% and in the second portion about 1.5 % wt% (when x% is 50%), or that the weight percentage of the tastant in the first portion is about 10 wt.% and in the second portion about 2 % wt% (when x% is 20%).

The first portion tastant weight percentage and the second portion tastant weight percentage, and optionally other (or "third") portion tastant weight percentages, may be selected to obtain the desired first bulk region tastant weight percentage, second bulk tastant weight percentage, and optionally other bulk region tastant weight percentages, respectively, and the tastant bulk weight percentage of the food product. More especially, the respective first portion tastant weight percentages of one or more first portions of starting materials and the respective second portion tastant weight percentages of one or more second portions of starting materials, and optionally one or more other (or "third") portion tastant weight percentages of one or more other portions (of starting materials), respectively, may be selected to obtain the desired one or more first bulk region tastant weight percentage of the one or more first bulk regions, respectively, second bulk tastant weight percentages of the one or more second bulk regions, respectively, and optionally one or more other bulk region tastant weight percentages of one or more other bulk regions, respectively, and the tastant bulk weight percentage of the food product.

A tastant may be defined as any substance, e.g. salt, capable of eliciting gustatory excitation, i.e. stimulating the sense of taste. A tastant preferably has no noticeable smell. The term "tastant" is known to the person skilled in the art. The tastant in the invention may especially comprises one or more tastants selected from the group consisting of bitter, sweet, sour, salty and umami tastants, more especially selected from the group consisting of sugars, sweeteners, salts (including mixes of salts), taste potentiators and acidulants.

The sweet tastant may especially comprise a sugar and/or a sweetener. The umami tastant especially comprises a taste potentiator. The salty tastant especially comprises a salt. The sour tastant especially comprises an acidulant.

In an embodiment, the sweet tastant may be selected from the group consisting of one or more sugars including but not limited to sucrose, glucose, fructose, one or more monosaccharides, one or more disaccharides, syrups, one or more molasses and one or more fruit sugars, one or more sweeteners including but not limited to acesulfame potassium, alitame, aspartame, cyclamate, glycyrrhizin, neotame, perillartine, saccharin and sucralose.

The salty tastant may in an embodiment include one or more salts including but not limited to sodium chloride, potassium chloride, one or more other alkali metal-halogen salts, one or more other earth alkali metal-halogen salts, one or more other alkali metal-phosphate salts, one or more other earth alkali metal-phosphate salts. The salty tastant may especially comprise NaCl and/or KCl, especially NaCl (especially kitchen salt). Optionally, the salty tastant may also comprise a salt replacer such as CaCl₂. A salt replacer is herein defined as a compound that is used to at least partially replace NaCl in a food product (as salty tastant).

The taste potentiator may for instance comprise one or more compounds or compositions selected from the group consisting of yeast extracts, glutamic acid (such as mono sodium glutamate (MSG)), salts of inosinic acid, guanylic acid, adenylic acid, uridylic acid cytidylic acid. Taste potentiators are for instance also listed in WO/2006/127935.

The sour tastant comprises in an embodiment one or more acidulants (food acids such as acetic acid, citric acid, lactic acid, phosphoric acid, hydrochloric acid, tartaric acid, maleic acid, and propionic acid), etc. Fumaric acid is preferably not used as tastant.

The bitter tastant may be defined herein as a compound or molecular complex that induces, in a subject, the perception of a bitter taste. In particular, a bitter tastant is one which results in the activation of gustducin and/or transducin. Examples of bitter tastants include but are not limited to denatonium benzoate ("denatonium"; also "DEN"), quinine hydrochloride ("quinine"; also "QUI"), strychnine hydrochloride ("strychnine"; also "STR"), nicotine hemisulfate ("nicotine"; also "NIC"), atropine hydrochloride ("atropine"; also "ATR"), sparteine, naringin, caffeic acid ("caffeine"; also "CAF"), quinacrine, and epicatechin.

The kokumi tastant is also sometimes indicated as heartiness tastant, but has also been described variously as continuity, mouthfulness, mouthfeel, and thickness. Kokumi can be used to give a 'mature' cheese taste, to enhance vegetable flavours, to enhance meat flavour giving fullness and longer lasting taste, to round out acid notes of for instance mayonnaise & dressings, to reduce sodium level of foods, to give a similar fullness to full-fat products while reducing oil-content, etc. Examples of kokumi tastants are for instance certain glycopeptides and peptides which provide a kokumi taste imparting function, such as for instance mentioned in US20060083847, US2008248175 or W02007055393.

In an embodiment, at least 10 wt.%, more preferably at least 50 wt%, most preferably at least 70, 80, 90, 95, or 100 wt.% of the tastant comprised by the first portion of starting materials for making the food product is provided *as is,* preferably without a tastant coating or tastant particle coating. Additionally or alternatively, preferably at least 10 wt.%, more preferably at least 50 wt%, most preferably at least 70, 80, 90, 95, or 100 wt.% of the tastant comprised by the second portion for making the food product is provided *as is,* preferably without a tastant coating or tastant particle coating. Herein, said coating may essentially consist of one or more materials selected from the group consisting of fatty acids and mono-, di- and triglycerides. The thickness of said coating is preferably less than 1 mm, even more preferably less than 0.1 mm, most preferably less than 0.01 mm. The presence of a tastant coating or tastant particle coating may be less preferred because it may take up formulation space.

Especially in case the tastant may influence process (b.) of the method, in particular when the tastant may have a material effect upon the development of the food product during its preparation, it may be preferred that the first portion of starting materials and the second portion of starting materials comprise a concentration of a free tastant which is about the same between said portions, and wherein the remaining amount of tastant comprised by the first portion of starting materials is provided as a protected tastant. Herein, the term "free tastant" refers to the tastant *as is*, preferably to the tastant in the absence of a tastant coating or tastant particle coating, wherein said coating preferably consists of one or more materials selected from the group consisting of fatty acids and mono-, di- and triglycerides; the thickness of said coating preferably being less than 1 mm, even more preferably less than 0.1 mm, most preferably less than 0.01 mm; the term "protected tastant" refers to the tastant in the presence of a tastant coating or tastant particle coating, wherein said coating preferably consists of one or more materials selected from the group consisting of fatty acids and mono-, di- and triglycerides; the thickness of said coating preferably being less than 1 mm, even more preferably less than 0.1 mm, most preferably less than 0.01 mm; the term "about the same" means that free tastant weight percentage in the two portions are equal within a margin of 10%.In case more than one tastant is applied, preferably at least one tastant has the herein indicated tastant weight percentage difference between the first and the second portion of starting materials. To obtain for each tastant the desired effect, each tastant individually has independently the herein indicated tastant weight percentage difference between the (first and the second) portion(s).

In a specific embodiment, the weight ratio of the first portion and the second portion of starting materials for making the food product is in the range of about 0.01-100, especially about 0.1-10, more especially 0.5-2. When a plurality of first and/or second portions is applied, the weight ratio of the sum of the first portion(s) and the second portion(s) for making the food product is in the range of about 0.01-100, especially about 0.1-10, more especially 0.5-2. In a specific embodiment, the first and the second portion are combined in a weight ratio in the range of 1:20-20:1.

The first and the second portion (and optionally other portions) are combined. In general this may comprise (gentle) mixing, (gentle) kneading, folding, plaiting, laminating, compounding, extruding, co-extruding, injection moulding, or other methods known in the art, like for instance depositing (such as in the case for confectionery).

The portions are in general combined as solids, semi-solids or as (viscous) liquids. Also a combination of liquid portion (be it a first or a second portion) and a solid portion (be it a second or a first portion) may be possible. In a preferred embodiment, when using a liquid, the portion has a yield stress in the range of about 0.1-10000 Pa, especially about 0.1-1000 Pa, preferably in the range of about 1-100 at 20°C. The yield stress can be determined according for instance the method described in EP 1214887. Further, in a preferred embodiment, when using a liquid, the portion preferably has a viscosity in the range of about 10² - 10⁶ mPa.s at 20 °C, preferably in the range of about 10³ - 10⁶ mPa.s. A solid food product may in an embodiment have a viscosity larger than about 10⁶ mPa.s at 20 °C. These viscosities may be obtained at a shear rate of about 10 s⁻¹.

Further, in an embodiment, when using two (or more) liquids, the liquids may be substantially miscible or substantially immiscible liquids. An advantage of using substantially immiscible liquids is that tastant diffusion may be limited.

Herein, the term "immiscibility" may relate to kinetic immiscibility of two or more liquids, which is the case if, for example, at least one and preferably each of the liquids has a yield stress within the above-mentioned region. Immiscibility may also relate to thermodynamic immiscibility, in the sense that they are substantially incompatible with each other, for example due to differences in solubility parameters. An example of thermodynamic immiscibility of two liquids relates to the case wherein the first liquid is water and the second liquid is an oil, for example sunflower oil.

The phrase "preparing the food product" may be directed to different embodiments. For instance, it may include rising and proving of a dough, it may (further) include (pre-)baking of such dough, frying of such dough, cooking of such dough, etc. It may further comprise (additional) actions known to the person skilled in the art like packaging the thus obtained food product, coating the thus obtained, etc. It may also comprises hardening (solidifying) the food product or pressing the food product.

In a specific embodiment, both the first and the second portion(s) of starting materials comprise dough, wherein the tastant comprises salt, and wherein preparing the food product comprises baking, cooking or frying the combined doughs. The doughs may be combined before proving or after proving. Here, the first portion(s) of starting materials, i.e. the (first) dough may have a first portion tastant weight percentage in the range of about 0.1-3, especially 0.5-2 wt.%, relative to the dough. This weight percentage, and the weight percentage of the second portion(s) and optionally other portions, may be selected to obtain the desired bulk region weight percentage of the respective regions in the food product, as well as the tastant bulk weight percentage.

Dough may for instance comprise water, a flour, and/or a starch, wherein the flour is preferably one or more flours selected from the group of wheat flour, maize flour, potato flour).

Hence, by combining the first portion of starting materials for making the food product and the second portion of starting materials for making the food product, and preparing the food product, the food product with the inhomogeneous tastant bulk distribution according to the invention may be obtained.

It is especially desired that the consumer does not perceive sensory contrast when consuming the food product. Hence, the first portion(s) and the second portion(s) and optionally the further portions are preferably processed in such a way that discrete first and second, and optionally further, regions are obtained, which allow a reduction in the bulk tastant weight percentage, but consumer does not perceive sensory contrast when consuming the food product. For instance, this can be obtained by alternating regions (for instance by making a laminate of the portions and than further making the food product).

### Food product

The invention further provides in an aspect a food product comprising a tastant, the food product having a tastant bulk weight percentage and an inhomogeneous tastant bulk distribution. Such food product may be obtainable with the method according to the invention.

The food product according to an embodiment of the invention comprises
a. a first bulk region (also indicated as "first region") comprising the tastant, the first bulk region having a first bulk region tastant weight percentage; and
b. a second bulk region (also indicated as "second region") optionally comprising the tastant, the second bulk region having a second bulk region tastant weight percentage.

Thus, the food product according to an embodiment of the invention comprises at least a first bulk region and a second bulk region, although in a further embodiment more regions may be present. The term "bulk region" refers to partitions in the bulk and thus does especially not refer to coatings. The term "bulk" may be interpreted as anything in the food product at a distance of about 0.2 mm, more especially at a distance of about 0.5 mm from the surface of the food product. Especially, the top or outer layer or surface of the product is not considered as bulk, although of course a bulk region may extend to the surface of the product.

The first and the second bulk region have different weight percentages of the tastant. Especially, the second bulk region tastant weight percentage is in the range of 0-75 % of the first bulk region tastant weight percentage, especially in the range of about 10-75 % (see also above). Hence, the second region may not include the tastant or may include the tastant in a tastant weight percentage in the order of up to about 75% of the first region tastant weight percentage, especially in the order of up to about 50%. In this way, the difference in tastant level may be substantial enough to obtain for instance the effect that the bulk weight percentage of the tastant may be decreased, while maintaining the same subjective tastant (weight percentage) perception. Hence, the tastant may optionally be present in the second region.

Preferably, the second bulk region tastant weight percentage is in the range of about 0-40 % of the first bulk region tastant weight percentage, more preferably in the range of about 0-20 % of the first bulk region tastant weight percentage. In a further embodiment, the bulk region tastant weight percentage in the second region is at least 10 % of the bulk region tastant weight percentage of the first region. The indication x% of the first bulk region tastant weight percentage indicates for instance that the bulk region tastant weight percentage of the tastant in the first bulk region is about 3 wt.% and in the second bulk region about 1.5% wt.% (when x is 50).

In this way, the tastant is distributed inhomogeneously in the food product. Note however that within the region, the (local) tastant weight percentage may not vary to large extents. Especially, local weight percentages of the tastant within the bulk region may not differ much from the bulk region tastant weight percentage. In general, the local tastant weight percentage within the first bulk region is within about +/- 20%, especially within about +/- 10%, more especially within about 5% of the first bulk region tastant weight percentage. For instance, assuming a first bulk region tastant weight percentage of 2 wt.%, local variations within the first bulk region will be in the range of about 1.6-2.4 wt.% (assuming +/-20%), especially within about 1.9-2.1 wt.% (assuming +/- 10%), etc.

The local variations within the second bulk region of the second bulk region tastant weight percentage may then also be within about +/- 20%, especially within about +/- 10%, more especially within about 5% of the first bulk region tastant weight percentage, respectively, with a minimum of 0 wt.% of course. Hence, assuming first bulk region tastant weight percentage of 2 wt.% (see example above), a second bulk region tastant weight percentage of 50% of the first bulk region tastant weight percentage, i.e. 1 wt.%, the local variations within the second bulk region will be in the range of about 0.6-1.4 wt.% (assuming +/- 20%), especially within about 0.9-1.1 wt.% (assuming +/- 10%), etc. Further, assuming a second bulk region tastant weight percentage of 0% of the first bulk region tastant weight percentage, i.e. 0 wt.%, the local variations within the first bulk region will be in the range of about 0-0.4 wt.% (assuming +/- 20%), especially within about 0-0.1 wt.% (assuming +/-10%), etc. Such first bulk region and such second bulk region each independently may have a volume of at least about 1 mm³, more especially at least about 1 cm³, such as for instance about 0.5-1000 cm³, such as 0.5-100 cm³, more especially 1-10 cm³. Smaller volumes may also be possible, such as 0.5-5 cm³ or 0.5-2 cm³ (see also below). Note that in case there is more than one first bulk region and/or more than one second bulk region, each (first or second) bulk region separately and independently may, in specific embodiments, have a volume in the ranges as indicated herein. Hence, the first bulk region(s) and second bulk region(s) (and thus optionally also further bulk region(s) each independently may have a volume of 1 mm³ - 1000 cm³, such as 0.5-1000 cm³, especially 1-1000 cm³, such as 0.5-500 cm³, preferably 0.5-100 cm³, especially 0.5-20 cm³, such as preferablyl-10 cm³. For instance, in bread, the regions may for instance be in the range of 10-40 cm³, such as 15-25 cm³, whereas for confectionery, the regions may for instance be in the range of 0.1-2 cm³, such as 0.2-1 cm³.

Hence, in a specific embodiment, the invention provides a food product comprising a tastant, the food product having a tastant bulk weight percentage and an inhomogeneous tastant bulk distribution, wherein the food product comprises:
a. a first bulk region comprising the tastant, the first bulk region having a first bulk region tastant weight percentage; and
b. a second bulk region optionally comprising the tastant, the second bulk region having a second bulk region tastant weight percentage,
wherein the first bulk region has a substantially homogeneous tastant bulk distribution, or wherein the second bulk region has a substantially homogeneous tastant bulk distribution, or wherein both the first bulk region and the second bulk region have independently a substantial homogeneous tastant bulk distribution.

In an embodiment, the first bulk region and the second bulk region each independently have a volume of at least about 1 mm³, more especially at least about 1 cm³.

The first region or the second region will in an embodiment not consist of only the tastant(s), but comprise also other ingredients or components. Hence, the tastant weight percentage in the first and in the second region will in general independently be lower than about 90 wt.%, and in case of non-sweet tastants, especially independently below about 50 wt.%, even more especially below about 30 wt.%, yet even more especially below about 10 wt.%, even more especially below about 5 wt.%, relative to the weight first or second region, respectively. When more than one tastant is present in the first or the second region, these numbers may apply to the sum of the weight percentage of the tastants in the first and the second region, respectively. Note that the terms first and second are only a matter of indication and may for instance differ per tastant.

As mentioned above, the tastant may include combinations of two or more tastants, including combinations of different tastants within the same tastant category, such as a mixture of salts. The distribution of the tastants may be independent of each other. For instance, inhomogeneous food products may include food products with a high weight percentage (first) tastant region with a taste potentiator and a low weight percentage (second) tastant region without potentiator, but also the reverse, i.e. a high weight percentage tastant (first) region with no taste potentiator and a low weight percentage tastant (second) region with a high taste potentiator weight percentage (note that in this example, when seen from the perspective of the taste potentiator, the latter region may be considered a first region and the former region a second region).

In a specific embodiment, the "first region" and "second region" are substantially identical with respect to composition (i.e. ingredients (or components) included in the respective region. Where more than ingredient (or component) is contained in the region preferably also the relative amounts of those ingredients (or components) in the respective regions), are substantially identical.

In a further embodiment, the "first bulk region" and "second bulk region" are substantially identical with respect to composition except for the tastant, and optionally except for one or more of the ingredients (or components) selected from the group consisting of flavours, aromas, colouring agents, and seasonings, and optionally except for one or more of the starting materials selected from preservation agents and anti-bacterials, and optionally except for one or more of the starting materials selected from the group consisting of emulsifiers, enzymes and redox substances (see also above). Hence, the first bulk region and the second bulk region (and optionally further bulk regions) are substantially identical in composition, except for the tastant.

Hence, each respective region may further optionally differ in relative amounts of the ingredients (components) relative to each other and may further optionally differ with respect to less essential or non-essential components such as one or more selected from the group consisting of flavours, aromas, colouring agents, seasonings, preservation agents, anti-bacterials, emulsifiers, enzymes, redox substances, and yeast. Hence, in an embodiment, especially with bread as food product, bread flavours, spices, or herbs, may also be distributed inhomogeneously.

It is preferred that the protein, carbohydrate, and/or the fat weight percentage is substantially the same for the two regions. Further, it is especially preferred that the protein, carbohydrate, and/or fat composition in the two regions is substantially the same. Hence, the first and the second regions (and optionally further regions) preferably have substantially the same macro nutrient composition. It is especially preferred that the protein, starch, and/or the fat weight percentage is substantially the same for the two regions. Further, it is especially preferred that the protein, starch, and/or fat composition in the two regions is substantially the same. This may especially apply to dough products.

Therefore, preferably the type of one or more of the protein, carbohydrate (such as starch) and fat are substantially the same for the first and the second regions (and optionally also for further regions). Even more preferably, the weight percentages of protein, carbohydrate and fat are substantially the same.

Advantageously, the distribution of one or more macro nutrients is thus substantially homogenous in the (bulk of the) food product.

The phrase "the "first region" and "second region" are substantially identical with respect to composition (i.e. ingredients (or components) included in the respective regions" may especially indicate that the relative amounts of the components in the respective regions (except for the tastant) are substantially the same. Preferably, the composition defined in weight percentages of the first region and the composition defined in weight percentages of the second region are substantially the same, preferably are identical for at least 80%, preferably at least 90 %, even more preferably at least 95%. It is further referred to the above table, wherein "1^{st} (wt%)" and "2^{nd} (wt%)" may relate to the weight percentage of the components in the first and second regions, respectively, but may also be interpreted as the weight percentages of the components in the first and second regions, respectively.

The invention may thus provide a food product that is essentially homogeneous with respect to the components (or ingredients), especially except for the tastant. If desired, also some other components (such as a flavour or an emulsifier) may be distributed inhomogeneously, but preferably, the macro nutrients are distributed homogeneously.

Therefore, the invention also provides in an embodiment a food product comprising a tastant, the food product having a tastant bulk weight percentage and an inhomogeneous tastant bulk distribution, wherein the food product comprises a first bulk region comprising the tastant, the first bulk region having a first bulk region tastant weight percentage, and a second bulk region optionally comprising the tastant, the second bulk region having a second bulk region tastant weight percentage, wherein the second bulk region tastant weight percentage is in the range of 0-75 % of the first bulk region tastant weight percentage, and wherein the first bulk region and the second bulk region each independently have a volume of at least 1 mm³, respectively, and wherein the food product is essentially homogeneous with respect to the components, except for the tastant.

Further, in an embodiment, the invention provides a food product comprising a tastant, wherein the tastant is inhomogeneously distributed in the bulk of the food product, wherein the food product comprises a first bulk region and a second bulk region, wherein the first bulk region comprises the tastant with a first weight percentage relative to the first bulk region, wherein the second bulk region optionally comprises the tastant with a weight percentage relative to the second bulk region, wherein the second bulk region comprises the tastant with a second weight percentage in the range of 0-75% of the first weight percentage of the tastant in the first bulk region, and wherein the first bulk region and the second bulk region each independently have a volume of at least 1 mm³, and wherein the food product is essentially homogeneous with respect to the components, except for the tastant.

As will be clear to the person skilled in the art, differences in compositions with respect to tastants and other ingredients or components, may be obtained by using portions with different compositions of starting materials and making a food product thereof.

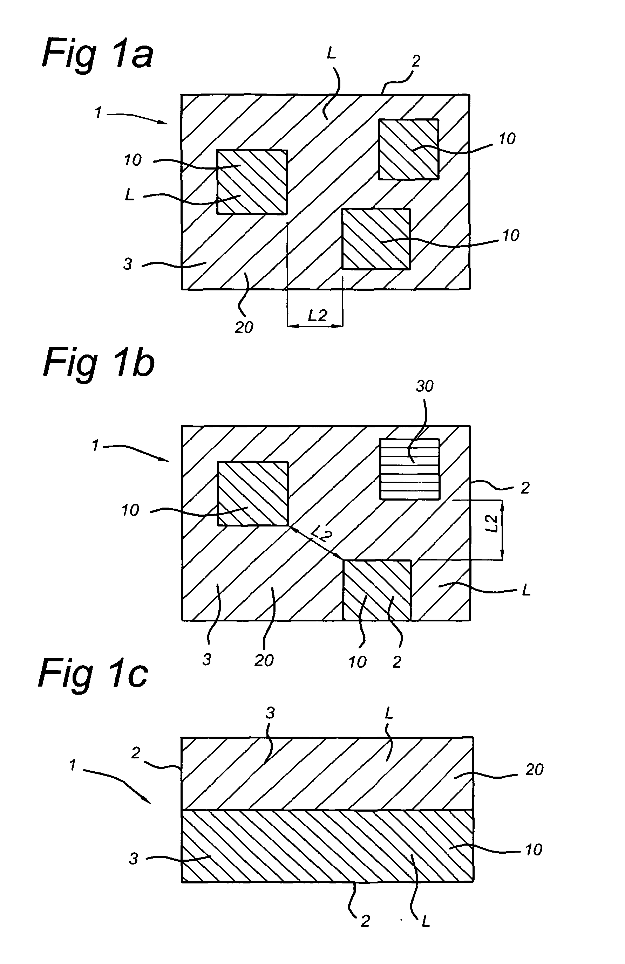

Referring to figure 1a, the food product is indicated with reference 1. The food product has a surface 2 and the bulk of the food product 1 is indicated with reference 3. The food product 1 has a first bulk region 10. Actually, in the schematic drawing of figure 1a, the food product 1 has 3 regions that qualify as first bulk regions 10, respectively. The food product 1 also comprises a second bulk region 20. The weight percentage of the tastant is different for the different regions. The first bulk regions 10 have a higher bulk region tastant weight percentage and the second bulk region 20 has a lower bulk region tastant weight percentage. The difference is indicated with the different shadings of the regions 10, 20.

Since the terms "first bulk region" or "second bulk region", etc., may also refer to a plurality of first bulk regions or second bulk regions, respectively, more than one first and/or second bulk regions may be present. In the figure 1a, this is indicated by way of example with the three first bulk regions 10. Note however that each first bulk region 10 or second bulk region 20 independently may have a volume of at least 1 mm³, see above. Figure 1a schematically depicts discrete regions (i.e. especially the first bulk regions 10).

Especially, inhomogeneities in the tastant content over length scales in the range of millimetres may provide the desired effect. A shortest distance L2 between two bulk regions of the same type, such as two first bulk regions 10 in figure 1a, measured through the intermediate bulk region of another type, which is here second bulk region 20, is preferably in the range of 0.5-100 mm, such as especially 1-50 mm, like 1-20 mm.

As mentioned above, the term "first bulk region 10" may refer to a plurality of first bulk regions 10 (likewise this may apply to the term "second bulk region 20"). In the schematic embodiment of figure 1a, the food product 1 comprises a plurality of first bulk regions 10, here by way of example embedded in the second bulk region 20. In this schematic embodiment, the first bulk region 10 (i.e. the plurality of first bulk regions 10) and the second bulk region 20 together represent more than 90 wt.% of the food product 1 (here in fact substantially 100 wt.%).

Hence, the food product according to embodiments of the invention may have one or more first bulk regions and one or more second bulk regions.

However, the presence of the first and the second bulk region(s) does not exclude the possible presence of other bulk regions. This is schematically indicated in figure 1b.

Referring to figure 1b, the food product is again indicated with reference 1. The food product 1 has two first bulk regions 10 and also comprises second bulk region 20. Further however, the food product 1 also comprises a third bulk region 30, indicated with again different shading. The third bulk region 30 does not necessarily qualify as first or second bulk region, but could do so. Further, while the first bulk region 10 and the second bulk region 20 qualify with respect to each other as first and second bulk region, respectively, for instance the third and the first bulk region may for instance again qualify as first and second bulk region with respect to each other. The terms "first" and "second" (and "third") have no specific meaning than to distinguish between different bulk regions.

The bulk regions may together represent for instance more than 30 wt.%, preferably more than 60 wt.%, even more preferably at least 90 wt.% of the food product 1. In this schematic embodiment of figure 1b, the first bulk region 10 (i.e. the plurality of first bulk regions 10), the second bulk region 20, and the third bulk region 30 together represent more than 90 wt.% of the food product (here in fact substantially 100 wt.%).

In another embodiment, the food product 1 of the invention may comprise layers. Such embodiment is schematically indicated in figure 1c, wherein two layers are shown, one layer being the first bulk region 10 and the other layer being the second bulk region 20. Hence, the first and second bulk regions 10, 20 may have any obtainable form. In an embodiment, the food product 1 is a layered product comprising a first layer comprising the first bulk region 10 and a second layer comprising the second bulk region 20. In Figure 1c, the food product 1 essentially consists of the first bulk region 10 and the second bulk region 20. As will be clear to the person skilled in the art, more than 2 layers may also be applied, for instance a stack of alternating layers of first and second regions, for instance 2-20 layers, such as 4-10 layers.

Referring to figure 1c, this figure may for instance relate to a lamellar dough or a lamellar bread.

Assuming a lamellar dough, the dough layers may have a thickness of 1-30 mm, like 1-10 mm. Further, the composite may comprise layers comprising a lower tastant content and layers comprising a higher tastant content, wherein these layers alternate.

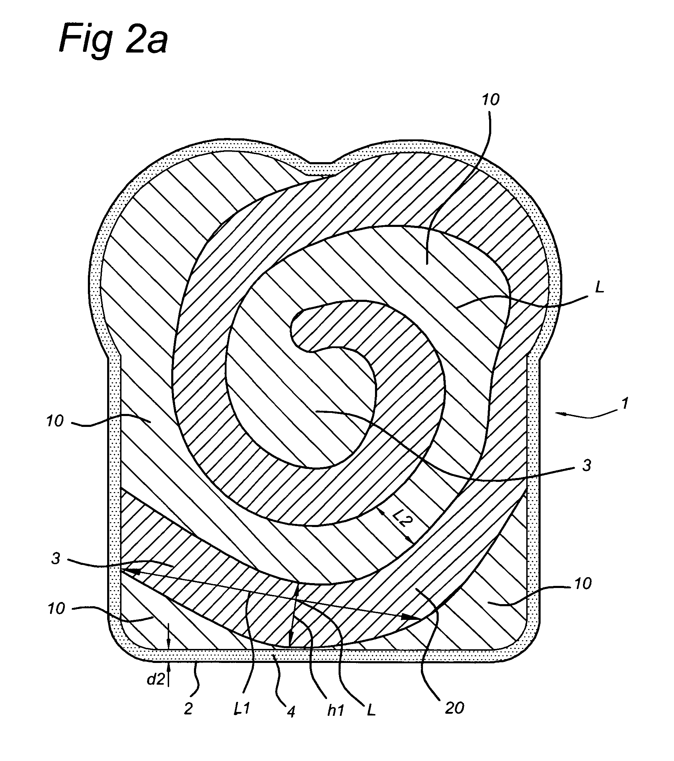

Assuming a lamellar bread, the bread layers may have a thickness of 1-60 mm, like 1.5-25 mm. Further, the composite may comprise layers comprising a lower tastant content and layers comprising a higher tastant content, wherein these layers alternate. As indicated above, in a specific embodiment each of the first bulk region(s) and second bulk region(s) have a volume of at least about 1 mm³, more especially at least about 1 cm³. In a further specific embodiment, the first bulk region, or the second bulk region, or both the first bulk region and the second bulk region have a region location where the length, the height and depth of the region at that location are each independently at least about 0.5 mm, more especially each independently at least about 1 mm. Referring to figures 1a-1c (and also figures 2a-2b, see below), non-limiting examples of such locations are indicated with the reference L. Note that the locations are indicated with one reference L, but the locations L are not dependent on each other.

According to this embodiment, within one or more of the bulk regions, locations L can be found, where, when a co-ordinate system would be drawn with a length, height and depth axis perpendicular to each other, with L as origin, the length (which may be indicated as L1) within the bulk region, the height (which may be indicated as h1) within the bulk region and the depth (which may be indicated as d1) within the bulk region are each independently at least about 0.5 mm, more especially each independently at least about 5 mm, even more especially each independently at least about 10 mm. The upper ranges for the length L1, height h1 and depth d1 will in general independently be in the range of about 500 mm, more especially in the range of about 400 mm, even more especially in the range of about 200 mm. Beyond those fictitious cubes at location(s) L, a region of another nature may be found. As mentioned above, the tastant bulk region weight percentage may be substantially constant within the region, i.e. the tastant bulk region distribution may be substantially homogeneous within the (first and/or second) bulk region. Also smaller dimensions are possible, such as with upper ranges for the length L1, height h1 and depth d1 will in general independently be in the range of about 50 mm, more especially in the range of about 40 mm, even more especially in the range of about 20 mm.

In a specific embodiment, the first bulk region and the second bulk region each independently have a volume in the range of about 0.1-1000 cm³, such as preferably 1-1.000 cm³, respectively, such as preferably 0.5-100 cm³. In a specific embodiment of the invention, the first and the second region are adjacent, and especially are partially in contact with each other. In the schematic figures 1a-1c and 2a-2b, all first regions 10 and second regions 20 are adjacent to each other; there are no intermediate regions 30 that may not qualify as first or as second region.

Note that although there are different regions 10,20, the food product 1 may be perceived as one food product 1, since only the tastant weight percentage may vary throughout the food product, which may in some embodiments not be visible by eye.

In a further embodiment, the food product has a food product volume (i.e. a total food product volume), wherein the first bulk region has a first bulk region volume and the second bulk region has a second bulk region volume, each independently having a volume in the range of equal to or larger than about 1 cm³ and equal to or smaller than about 75 vol.% of the food product volume (or total volume of the food product), respectively, wherein the first bulk region volume and the second bulk region volume together are equal to or smaller than the food product volume. The phrase "wherein the first bulk region volume and the second bulk region volume together are equal to or smaller than the food product volume" indicates that there may be more regions than the first bulk region and the second bulk region. Note that in case there is more than one first bulk region and/or more than one second bulk region, each (first or second) bulk region separately and independently may have a volume in the range of equal to or larger than about 1 cm³ and equal to or smaller than about 75 vol.% of the food product volume, wherein the sum of the first bulk region volume(s) and the sum of the second bulk region volume(s) together may be equal to or smaller than the food product volume. Preferably, the first and the second bulk region volume together provide about 50-100% of the total volume of the food product, preferably at least 60%, yet even more preferably at least 75%.

Further, preferably the first bulk region and the second bulk region together represent at least 30 wt.%, preferably at least 60 wt.%, such as preferably 80 wt.%, yet even more preferably at least 90 wt.% of the food product. In another embodiment, the first bulk region and the second bulk region, and optionally further bulk regions, represent at least 30 wt.%, preferably at least 60 wt.%, such as preferably 80 wt.%, yet even more preferably at least 90 wt.% of the food product.

In another embodiment, the weight ratio of the first bulk region and the second bulk region may be in the range of about 0.01-100, especially about 0.1-10. In case there is more than one first bulk region and/or more than one second bulk region, the weight ratio of the sum of the weight of the first bulk region(s) and the sum of the weight of the second bulk region(s) may be in the range of about 0.01-100, especially 0.05-20, even more especially about 0.1-10.

In a specific embodiment, the food product comprises a dough product, more especially a bread, such as a tin bread, wherein the tastant comprises salt, wherein the ratio of the first bulk region tastant weight percentage and second bulk region tastant weight percentage is in the range of about 2-20, and wherein the tastant bulk weight percentage is in the range of about 0.1-3, especially about 0.5-2 wt.%, on dough product base, or bread basis, respectively. In general, the salt bulk weight percentage for a "normal" bread will be in the range of about 1.8 - 2.4 wt.% salt on bread basis (for "normal" pastry the salt bulk weight percentage will be in the range of about 0.8 - 1.2 wt.% on flour base. Hence, the salt bulk weight percentage for such food products according to the invention may be similar or lower, such as about 0.5-2 wt.% on bread basis.

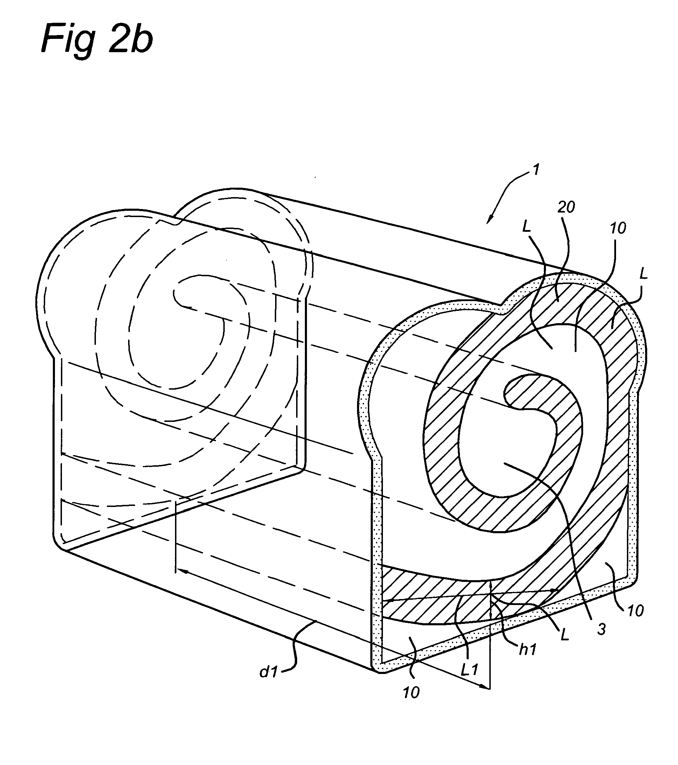

A schematic figure of a slice of bread or a cross section of bread is depicted in figure 2a. Here, such slice of bread or cross section of bread is depicted as food product 1. The food product 1 has a crust 4. Such food product 1 may be obtained by combining different dough sheets (see above; see also example) and moulding such sheets. The crust 4 may have a thickness d2; in general, the crust 4 may not be considered bulk. Hence, the bulk 3 may therefore be at a distance d2 of the surface 2 of about 1-5 mm. A perspective view of a bread as food product 1 is schematically shown in figure 2b. Locations L can be found, where, when a co-ordinate system would be drawn with length L1, height h1 and depth d1 form the coordinate system, perpendicular to each other, these dimensions could independently be at least about 0.5 mm, more especially each independently at least about 5 mm, even more especially each independently at least about 10 mm. In the example of 2b, at the location L where also a coordinate system is shown, L1 may be about 50 mm, h1 may be about 15 mm, and d1 may be about 200 mm. Beyond those fictitious cubes at location(s) L, a region of another nature may be found. As mentioned above, the tastant bulk region weight percentage may be substantially constant within the region, i.e. the tastant bulk region distribution may be substantially homogeneous within the (first and/or second) bulk region(s).

The shortest distance L2 between two bulk regions of the same type, such as between two parts of second bulk region 20 in figure 2a, measured through the intermediate bulk region of another type, which is here first bulk region 10, is preferably in the range of 0.5-100 mm, such as especially 1-60 mm, like 1-50 mm, like preferably 1-20 mm.

As mentioned above, the first bulk region 10, the second bulk region 20, and optionally further bulk regions together represent preferably more than 60 wt.% of the food product (here at least about 90 wt.% (since the crust 4 is not taken into account as bulk).

In a specific embodiment, especially wherein the food product comprises a baked dough product, such as a bread, the total bulk fat and oil content is smaller than 30 wt.%.

Therefore, the invention may advantageously provide the use of an inhomogeneous tastant bulk distribution in a food product for providing a food product with a reduced tastant bulk weight percentage. Further, the invention may also advantageously provide the use of an inhomogeneous tastant bulk distribution in a food product for enhancing and/or improving the sensory perception of the tastant in a food product.

### Further specific flour based embodiments

In a specific embodiment, a flour-based bakery product comprising at least two distinct flour-based bulk regions, including: (a) 5-95% by weight of the bakery product of a first flour-based bulk region comprising 0.1-15% of a tastant by weight of said first bulk region, said tastant being selected from the group consisting of a sugars, a sweetener, a salt, a taste potentiator and an acidulant; and (b) 5-95% by weight of the bakery product of another, second flour-based bulk region not containing said tastant or containing said tastant in a weight percentage that is less than 50% of the weight percentage of the same tastant in the first flour-based bulk region; wherein the first flour-based bulk region and the second flour-based bulk region together represent at least 30 wt.%, preferably at least 60 wt.% of the bakery product.

Preferably, the bakery the composition of the first flour-based bulk region defined in percentage by weight and the composition of the second flour-based bulk region defined in percentage by weight are at least 90 wt.%, preferably at least 95 wt.% identical (i.e. ID percentage).

In a specific embodiment, the first flour-based bulk region is comprised in the bakery product in the form of layers having a thickness of 1-60 mm, such as 2-50 mm, like 2-30 mm or of (other type of) discrete regions having a volume of 1 mm³-1000 cm³ (see also above). Preferably, the discrete regions have an aspect ratio of less than 30, preferably of less than 10. In an embodiment of the bakery product, the first flour-based bulk region and the second flour-based bulk region together form a lamellar composite.

Preferably, the weight ratio of the first bulk region and the second bulk region is in the range of 1:10 to 10:1. Especially, the bakery product is a dough, a par-baked dough product or a fully baked dough product. Further, the bakery product may be selected from the group consisting of bread, baked pastry products, pretzels, crackers, a cookie, and a biscuit. Especially, the bakery product may be a bread, preferably tin bread. Herein, the term "par-baked dough product especially refers to a partially baked (i.e. cooked) dough product which is after partially baking rapidly frozen for storage.

In a specific embodiment, the second flour-based bulk region contains the tastant in a weight percentage that is 4-40%, preferably 4-20% of the weight percentage of the same tastant in the first flour-based bulk region. Especially, the bakery product contains 0.1-3 wt.%, preferably 0.5-2 wt.% of the tastant. In an embodiment, both the first flour-based bulk region and the second flour-based bulk region contain 35-80 wt.% of flour, relative to the total weight of the first flour-based bulk region and the second flour-based bulk region, respectively.

The fat contents of the first flour-based bulk region and the second flour-based bulk region differ by no more than 30%, preferably by no more than 15%, preferably even less. As mentioned above, preferably the tastant is sodium chloride. However, in an embodiment, the tastant is a sugar selected from sucrose, glucose and fructose. Note that the weight percentages of more than one tastant may be varied. In the invention, at least one tastant is inhomogeneously varied, but if one or more other tastants are present, also one or more of these tastants may be varied. For instance, NaCl may be distributed inhomogeneously, whereas at the same time KCl is homogenously distributed.

In a further aspect, the invention also provides a method for the production of a composite bakery product comprising: (a) preparing a first flour-based dough containing 0.05-15 wt. % of a tastant selected from the group consisting of a sugars, a sweetener, a salt, a taste potentiator and an acidulant; (b) preparing a second flour-based dough not containing said tastant or containing said tastant in a weight percentage that is less than 50% of the weight percentage of the same tastant in the first flour-based dough; (c) combining the first flour-based dough with the second flour-based dough in a weight ratio that is within the range of 1:20 to 20 to produce a dough composite (with distinct flour-based bulk regions); and (d) optionally further processing the dough composite, such as pre-baking or baking the dough composite.

In an embodiment, one or more layers of the first flour-based dough are combined with one or more layers of the second flour-based dough to produce a laminated composite dough. The laminated composite dough may in an embodiment be rolled to yield a cylindrical dough product. Further, the cylindrical dough product may be transferred into a tin and may optionally be baked in an oven to yield a tin bread. Especially, the composite bakery product is a bakery product as described above. The dough layers preferably have a thickness of 1-10 mm. Layers comprising a lower tastant content (including absence of the tastant) and layers comprising a higher tastant content preferably alternate.

### Further embodiments.

*Note: where appropriate, any of the further embodiments described herebelow may be combined with one or more teachings or embodiments according to the method or the food product as described above. In all further embodiments, the tastant may additionally relate to a taste potentiator.*

*Bread.* In an especially preferred embodiment of the method wherein the first and second portion(s) relate to a dough. The dough may be any dough suitable for making bread. An especially suitable dough is a dough, preferably the dough described hereabove, which (further) comprises yeast. The tastant is preferably a salt, especially sodium chloride; the food product is a bread.

It is preferred that the first portion(s) and the second portion(s) of dough are combined with or following lamination of said portions. Additionally or alternatively, the first portion(s) and the second portion(s) may preferably be combined with or following co-extrusion of said portions. Additionally or alternatively, the first portion(s) and the second portion(s) may preferably be combined with mixing of said portions.

According to an especially preferred embodiment, before combining the portions, each of said portions is subdivided into smaller subportions. These subportions preferably have a volume of at least 1 mm³. It is preferred the first portion(s) and the second portion(s) are combined such that following process (a.) each of said portions may still (distinctly) reside in volumes of at least 1 mm³. Before combining, said portions may be suitably cooled down to a temperature of between 0 and 10 °C, or even frozen. Accordingly, the consistency of said portions may be improved, so that intermixing of said portions may be (further) reduced or prevented.

It has been found that the salt may have a material effect upon proving of a dough comprising yeast. In particular, increasing salt concentrations may negatively influence the speed and/or extent of proving. According to this embodiment, the first portion of starting materials and the second portion of starting materials comprise a concentration of a free salt which is about the same between said portions, and wherein the remaining amount of tastant comprised by the first portion of starting materials is provided as a protected salt. Herein, the term "free salt" refers to the salt *as is,* preferably to the salt in the absence of a salt coating or salt particle coating, wherein said coating, if present, preferably consists of one or more materials selected from the group consisting of fatty acids and mono-, di- and triglycerides; the thickness of said coating preferably being less than 1 mm, even more preferably less than 0.1 mm, most preferably less than 0.01 mm; the term "protected tastant" refers to the salt in the presence of a salt coating or salt particle coating, wherein said coating preferably consists of one or more materials selected from the group consisting of fatty acids and mono-, di- and triglycerides; the thickness of said coating preferably being less than 1 mm, even more preferably less than 0.1 mm, most preferably less than 0.01 mm; the term "about the same" means that free salt weight percentage in the two portions are equal within a margin of 10%. The salt is preferably sodium chloride or potassium chloride or a mixture thereof. The coating is preferably selected as a material which melts temperatures between 10 and 200 °C, more preferably between 20 and 180 °C, most preferably between 40 and 120 °C. The coating preferably comprises a low melt vegetable oil, for example as disclosed in W00074499. Most preferably, the coating consists of a low melt vegetable oil, for example as disclosed in W00074499. Accordingly, the salt may not directly contact the yeast during proving conditions (*i.e*. at a temperature of preferably between 4 and 40 °C) whilst the salt may be liberated during further preparation of the food product, especially during cooking or baking.

After combining the portions, the doughs may for instance be baked or pre-baked in order to prepare (further processing) a pre-baked bread or bread. Alternatively, the combined doughs may be frozen for storage, and later processing.

*Cheese.* In an especially preferred embodiment of the method, the first and second portion(s) relate to a curd. The term "curd" herein preferably has its usual meaning for the person skilled in the art of making cheese. The curd is preferably obtainable by coagulating a milk, preferably cow's milk. The curd preferably comprises a count of viable lactic acid bacteria and the tastant is a salt, especially sodium chloride; the food product is a cheese. The curd is preferably provided as particles which preferably have a volume of between 1 mm³ and 50 cm³, especially of between 5 mm³ and 5 cm³.

The first portion(s) and the second portion(s) of curd may be preferably combined with or following lamination or co-extrusion of said portions. However, it is especially preferred that the first portion(s) and the second portion(s) are combined with mixing of said portions of curd, wherein the curd is provided as particles which have a volume of between 1 mm³ and 50 cm³, especially of between 5 mm³ and 5 cm³ It is further preferred that after combining (with mixing) the portions of the curd, said portions are pressed ("preparing" or 'further processing"), so as to preferably provide a shaped curd mass. The shaped curd mass may take any form, for example that of a cheese wheel or cheese block. According to this embodiment, the shaped curd mass preferably has a weight of between 200g and 100 kg. The shaped curd mass is preferably not further salted by immersion in a brine bath. It is preferred that the first portion(s) and the second portion(s) are combined such that following process (a.) each of said portions may still (distinctly) reside in volumes of at least 1 mm³. Process (b.) preferably comprises ripening of the shaped curd mass.

*Composite cheese products.* In another embodiment of the method, the first and second portion(s) relate to a cheese *per se.* The cheese may be any cheese, including processed cheese. The cheese is preferably a semi-hard or hard cheese, such as Gouda, Edam, Emmental, Gruyere, Tilsit, Maasdammer, etc. The tastant is a salt, especially sodium chloride; the food product is a composite cheese product. The cheese is preferably provided as particles which preferably have a volume of between 1 mm³ and 50 cm³, especially of between 5 mm³ and 5 cm³. Alternatively, the cheese may be provided as slices having a thickness of preferably 0.1-10 mm.

The first portion(s) and the second portion(s) of cheese may be preferably combined with or following lamination or co-extrusion of said portions. Lamination is especially preferred in case of slices. It is especially preferred that the first portion(s) and the second portion(s) are combined with mixing of said portions of cheese, wherein the cheese is provided as particles which have a volume of between 1 mm³ and 50 cm³, especially of between 5 mm³ and 5 cm³. It is further preferred that after combining (with mixing) the portions of the curd, said portions are pressed ("preparing" or 'further processing"), so as to preferably provide a shaped cheese mass. The shaped cheese mass may take any form, an especially preferred shaped cheese mass may relate to a slice, a block or to a flat cylinder. According to this embodiment, the shaped cheese mass preferably has a weight of between 1 and 200 gram, preferably of between 5 and 50 gram.

For instance, the cheese may also be provided as grated cheese ("particles"). Two or more grated cheeses, forming the first and the second (and further) portions respectively (i.e. grated cheeses as portions, respectively), are combined, and the combined product may for instance be pressed into a cheese (i.e. a composite cheese).

Preferably, the second portion has a second portion tastant weight percentage in the range of 0-50 %, such as 0-30%, especially 0-25% of the first portion tastant weight percentage. Further, preferably the first portion and the second portion together represent at least 30 wt.%, preferably at least 60 wt.%, more preferably at least 90 wt%, yet even more preferably at least 95 wt.% of the composite cheese product. Further, preferably the first and the second portion are comprised by the composite cheese product in a ratio 5:1-1:5, preferably 0.5:1-1:0.5, yet even more preferably 0.8:1-1:0.8.

The product thus obtained, such as a shaped cheese mass, preferably has a weight in the range of about 10-25000 gram, such as 1-25 kg, or such as 10-100 gram.

It is preferred the first portion(s) and the second portion(s) are combined such that following process (a.) each of said portions may still (distinctly) reside in volumes of at least 1 mm³.

*Sausages and reconstituted meat products.* In another embodiment of the method, the first and second portion(s) relate to masses comprising meat particles. The masses are preferably plastic, deformable masses, respectively, further preferably having a consistency which is typical for preparing sausages or reconstituted meat products, respectively. The food product is preferably a sausage or a reconstituted meat product. The tastant is preferably a salt, especially sodium chloride. The meat particles preferably have a volume of between 0.1 mm³ and 50 cm³, especially of between 0.5 mm³ and 50 mm³. Instead of or in addition to sodium chloride, also a salt replacer may be applied, such as KCl, potassium lactate, or CaCl₂.

The first portion(s) and the second portion(s) (of the mass comprising the meat particles) may be preferably combined with or following lamination or co-extrusion of said portions. Co-extrusion may be especially preferred. Especially if the masses comprising the meat particles, respectively, have a semi-solid consistency, it is especially preferred that the first portion(s) and the second portion(s) are combined with mixing of said portions. Before combining, especially before combining with mixing, it is preferred that each of said portions is subdivided into smaller subportions. These subportions preferably have a volume of at least 1 mm³, more preferably of at least 10 mm³, even more preferably of at least 50 mm³, most preferably of at least 100 mm³. Further preferably, the average volume of the subportions is larger than the average volume of the meat particles. It is preferred the first portion(s) and the second portion(s) are combined such that following process (a.) each of said portions may still (distinctly) reside in volumes of at least 1 mm³, more preferably of at least 10 mm³, even more preferably of at least 50 mm³, most preferably of at least 100 mm³. Herein the average volume of the subportions is further preferably larger than the average volume of the meat particles. Process (b.) may comprise cooking and/or baking of the sausage or reconstituted meat product.

*Meat replacers.* For the preparation of meat replacers, the first and second portion(s) may relate to protein-rich material. The protein-rich material is an edible material comprising proteins in an amount of between 5-100 wt.% based on dry matter. The protein-rich material may favourably relate to a curd, especially to curd comprising less than 20 wt.% fat based on dry matter. The curd is preferably obtainable by coagulating a milk, preferably cow's milk or soy milk. The protein-rich material is preferably provided as particles which preferably have a volume of between 1 mm³ and 50 cm³, especially of between 5 mm³ and 5 cm³. The tastant is preferably a salt, most preferably sodium chloride.

However, in addition to or alternatively to sodium chloride, also CaCl₂ and/or KCl, especially CaCl₂, may be applied as tastant.

The first portion(s) and the second portion(s) of the protein-rich material may be preferably combined with or following lamination or co-extrusion of said portions. However, it is especially preferred that the first portion(s) and the second portion(s) are combined with mixing of said portions of curd, wherein the curd is provided as particles which have a volume of between 1 mm³ and 50 cm³, especially of between 5 mm³ and 5 cm³. It is further preferred that after combining (with mixing) the portions of the curd, said portions are pressed, so as to preferably provide a shaped curd mass. The shaped curd mass may take any shape, but preferably the shape of a ready-to-prepare piece of meat such as for example a schnitzel, a sausage, etc. According to this embodiment, the shaped curd mass preferably has a weight of between 10g and 500 g. It is preferred that the first portion(s) and the second portion(s) are combined such that following process (a.) each of said portions may still (distinctly) reside in volumes of at least 1 mm³, more preferably of at least 100 mm³, even more preferably of at least 10 cm³, wherein further preferably, the average volume of the subportions is larger than the average volume of the meat particles. Process (b.) may comprise cooking or baking of the artificial meat product.

It is preferred that the first portion of curds and the second portion of curds comprise a concentration of a free salt which is about the same between said portions, and wherein the remaining amount of tastant comprised by the first portion of starting materials is provided as a protected salt. It is further preferred that both portions comprise an amount of the protected salt. In another embodiment, all of the salt comprised by the first and second portion(s) of curds is provided as a protected salt.

*Confectionery.* In an embodiment, the first and second portion(s) may relate to a confectionery base. The tastant preferably comprises one or more tastants selected from the group consisting of a sugar (optionally including one or more of glucose syrup and sugar substitutes, a bulk sweetener (sugar alcohols, maltodextrins, etc.), a sweetener, and an intense sweetener), salt (optionally including a salt substitute (herein also mentioned salt replacers)), and an acidulant. The tastant is preferably selected as one or more compounds selected from the group consisting of a salt, a sugar and an acidulant.

In an embodiment, when combining said portions, at least two portions are provided as (viscous) solidifiable liquids. The solidifiable liquid is preferable capable of solidifying at temperatures below 70 °C, more preferably below 60 °C, most preferably below 50 or below 40 °C, even more preferably below 30 °C. According to this embodiment, said portions are preferably combined in a co-depositing process, so as to preferably provide a confectionery product having a layered structure (also called "laminate"); alternatively, said portions may be inhomogeneously mixed and then allowed to solidify. Yet alternatively, said portions may be combined in a two-step or multi-step depositing process, which preferably comprises applying a layer of one liquid portion into a mould (such as a starch mould) and allowing it to solidify, and then applying some or all of the other liquid portion on top of the solidified portion and allowing it to solidify. In this way a two or more layer laminate may be provided. Alternatively, these portions may preferably be combined with or following co-extrusion of said portions.

In another embodiment, when combining said portions, one portion is provided as a (viscous) solidifiable liquid as defined above and the other portion is provided as a confectionery base which is (semi) solid at a temperature of below 40 °C. According to this embodiment, it is especially preferred if the one portion provided as a (viscous) solidifiable liquid is used to coat the other portion provided as a (semi) solid, for example by dipping. Alternatively, the solidifiable liquid portion may be deposited on the semi-solid portion. The portion provided as the (viscous) liquid may also be sprayed upon the portion provided as the (semi-) solid. The steps of coating, dipping or depositing may be repeated. In such way, a layered structure or laminate may be provided. Alternatively, these portions may preferably be combined with or following co-extrusion of said portions.

In yet another embodiment, when combining said portions, one portion is provided as a viscosifiable liquid as defined above and the other portion is provided as a liquid which preferably solidifies in the finished product especially at temperatures lower than 40 °C, particularly at temperatures between 10-40 °C The portions are preferably combined using a one-shot machine or by a co-depositing process.

It is also possible to combine one portion which is provided as a (semi) solid confectionery base as defined above and the other portion is provided as a liquid which preferably solidifies in the finished product especially at temperatures lower than 40 °C, particularly at temperatures between 10-40 °C. Accordingly, a filled confectionery product is preferably formed, wherein the filling comprises the solidified liquid portion.

In yet another embodiment, when combining said portions, at least two portions are provided as confectionery bases which are (semi) solid at a temperature of below 40 °C, or lower. The (semi) solid portions are preferably deformable under pressure. The (semi) solid portions may be combined with overlaying them on top of each other. Before or after combining the said (semi) solid portions, the portions may be subdivided into smaller subportions (i.e. a plurality of first portions and/or a plurality of second portions). Alternatively, these portions may preferably be combined with or following co-extrusion of said portions. Yet alternatively, the (semi) solid first and second portion(s) may be combined with laminating said portions. Yet alternatively, the (semi) solid first and second portion(s) may be combined with (gentle) kneading and/or pulling.

According to an especially preferred embodiment, when combining at least two portions which are provided as confectionery bases which are (semi) solid at a temperature of below 40 °C, or when combining one portion which is provided as a (viscous) solidifiable liquid and another portion which is provided as a confectionery base which is (semi) solid at a temperature of below 40 °C, before combining said solid portions, each of the (semi)-solid portions is subdivided into smaller subportions. These subportions preferably have a volume of at least 1 mm³. It is preferred the first portion(s) and the second portion(s) are (optionally mixed and) combined, preferably using pressure (and/or shear), such that following process (a.) each of said portions may still (distinctly) reside in volumes of at least 1 mm³.

In an embodiment, the solidifiable liquid portion(s) as defined above and the confectionery base which is (semi) solid at a temperature of below 40 °C may comprise a gelling agent and preferably one or more thickening agents. The gelling agent preferably comprises one or more compounds selected from the group consisting of pectin, starch, agar agar, Arabic gum, carrageenan, xanthan gum, gelatine etc.. The thickening agent is preferably a hydrocolloid, especially a polysaccharide gum or a cellulose derivative. The liquid may comprise low melting fat , such as butter fat or cocoa fat.

Additionally or alternatively, the portions may also comprise a bulking agent which is preferably a compound selected from the group consisting of a polydextrose, a soluble (indigestible) fiber, such as soluble dietary fiber, or a maltodextrin, a sugar alcohol and a gelatine hydrolysate (also called collagen hydrolysate). Additionally or alternatively, the portions may also comprise an aroma and/or a colouring agent

The confectionery product is preferably a confectionery gummy, a jelly, a marshmallow, a chocolate confectionery or a chewy candy. Any of these products may be optionally coated. Marshmallows are preferably obtainable by co-extrusion or co-depositing. Gummies are preferably obtained by co-depositing. Chewy candies are preferably obtainable by kneading or pulling.

Hence, the invention provides in an embodiment a method for the production of a confectionery comprising a tastant, the confectionery product having a tastant bulk weight percentage and an inhomogeneous tastant bulk distribution, wherein the method comprises (a) combining a first portion of starting materials for making the confectionery and a second portion of starting materials for making the confectionery; and (b) preparing the confectionery, wherein the first portion of starting materials further comprises the tastant with a first portion tastant weight percentage, wherein the second portion of starting materials further optionally comprises the tastant with a second portion tastant weight percentage, and wherein the second portion tastant weight percentage is in the range of 0-75 % of the first portion tastant weight percentage.

The process of combining may especially be selected from the group of processes consisting of a lamination process, a co-extrusion process, a co-depositing process, a (gentle) kneading process and a (gentle) pulling process.

The invention provides in an embodiment thus also a confectionery comprising a tastant, the confectionery having a tastant bulk weight percentage and an inhomogeneous tastant bulk distribution, wherein the confectionery comprises: (a) a first bulk region comprising the tastant, the first bulk region having a first bulk region tastant weight percentage; and (b) a second bulk region optionally comprising the tastant, the second bulk region having a second bulk region tastant weight percentage, wherein the second bulk region tastant weight percentage is in the range of 0-75 % of the first bulk region tastant weight percentage, and wherein the first bulk region and the second bulk region each independently have a volume of at least 1 mm³, respectively.

Yet even further, the invention also provides in an embodiment a confectionery comprising a tastant, wherein the tastant is inhomogeneously distributed in the bulk of the confectionery, wherein the confectionery comprises a first bulk region and a second bulk region, wherein the first bulk region comprises the tastant with a first weight percentage relative to the first bulk region, wherein the second bulk region optionally comprises the tastant with a weight percentage relative to the second bulk region, wherein the second bulk region comprises the tastant with a second weight percentage in the range of 0-75% of the first weight percentage of the tastant in the first bulk region, and wherein the first bulk region and the second bulk region each independently have a volume of at least 1 mm³.

Preferably, the first portion of starting materials and the second portion of starting materials are, except for the tastant, substantially identical with respect to composition. Further, preferably, the first bulk region and the second bulk region are, except for the tastant, substantially identical with respect to composition. In case sugar is a bulk component, a bulk agent (such as a carbohydrate, a sugar alcohol (such as xylitol), a dietary fiber (such as polydextrose) replacing the sugar in the second portion or bulk region, respectively, may be considered substantially identical to the sugar as bulk component in the first portion or bulk region, respectively.

*Non-frozen dairy dessert products.* In an embodiment, the first and second portion(s) may relate to a dairy product. The food product is non-frozen dairy dessert product which is preferably (semi) solid. The tastant is preferably a sugar or a salt. Preferably, when combining said portions, one portion is provided as a (viscous) liquid and the other portion is provided as a (semi) solid. Preferred features of the liquid are described hereabove. The liquid is further preferably a solidifiable liquid. The solidifiable liquid is preferable capable of solidifying at temperatures below 30 °C, more preferably below 20 °C, most preferably below 15 °C. The liquid may comprise a thickener, preferably gelatine and/or a gum. It is preferred that the first portion(s) and the second portion(s) of dairy base are combined with lamination of said portions, e.g. by dipping the portion provided as a (semi) solid into the portion provided as a (viscous) liquid. The portion provided as the (viscous) liquid may also be sprayed upon the portion provided as the solid.

In another embodiment the first portion(s) and the second portion(s) are each provided as (semi) solids, which are preferably deformable under pressure. These portions may preferably be combined with or following co-extrusion of said portions. Additionally or alternatively, the first portion(s) and the second portion(s) may preferably be combined with mixing of said portions. Additionally or alternatively, the first portion(s) and the second portion(s) may preferably be combined by laminating said portions. According to an especially preferred embodiment, before combining said (semi) solid portions, each of said portions is subdivided into smaller subportions. These subportions preferably have a volume of at least 1 mm³. It is preferred the first portion(s) and the second portion(s) are combined, preferably using pressure (and/or shear), such that following process (a.) each of said portions may still (distinctly) reside in volumes of at least 1 mm³. Before combining, said portions may be suitably cooled down to a temperature of between 0 and 10 °C, or even frozen. Accordingly, the consistency of said portions may be improved, so that intermixing of said portions may be (further) reduced or prevented.

In yet another embodiment the first portion(s) and the second portion(s) are each provided as viscous liquids. Preferred features of the liquids are described hereabove. These portions may preferably be combined with or following lamination, co-extrusion or mixing of said portions.

In yet a further embodiment, the first and the second portion may be provided as liquid dairy products (e.g. liquid custard, yoghurt), respectively, and combined by especially mixing-in in an inhomogeneous way, by for instance blurred mixing (carefully mixing but not complete mixing; or injection of one dairy phase in the other dairy phase), side-by-side filling, horizontal filling, filling in twisted layers (see e.g. EP1518465 / EP1602579).

After filling, the combined portions can be gelled by cooling down, for instance to refrigerator temperatures (such as about 4 °C).

*Mashed-potato-based products.* In an especially preferred embodiment of the method wherein the first and second portion(s) relate to a composition comprising (mashed) potatoes or a reconstituted potato product. The composition preferably has a paste-like consistency. The tastant is preferably a salt. The salt is preferably sodium chloride. The food product is a mashed-potato-based product, which is preferably obtained by cooking, baking or (deep-)frying. Most preferably, the food product is a potato-based snack product.

It is preferred that the first portion(s) and the second portion(s) of the composition are combined with or following lamination of said portions. Additionally or alternatively, the first portion(s) and the second portion(s) may preferably be combined with or following co-extrusion of said portions. Additionally or alternatively, the first portion(s) and the second portion(s) may preferably be combined with mixing of said portions.

According to an especially preferred embodiment, before combining the portions, each of said portions is subdivided into smaller subportions. These subportions preferably have a volume of at least 1 mm³. It is preferred the first portion(s) and the second portion(s) are combined such that following process (a.) each of said portions may still (distinctly) reside in volumes of at least 1 mm³. Before combining, said portions may be suitably cooled down to a temperature of between 0 and 10 °C, or even frozen. Accordingly, the consistency of said portions may be improved, so that intermixing of said portions may be (further) reduced or prevented.

### Examples

### Example 1: Salt perception in bread

### Experimental set up

Three bread samples were made with about 1.5 wt% salt on flour (basis), but varying in salt distribution:
C) reference bread with a homogeneous salt distribution with 1.0 cm layer thickness of dough with medium/medium salt content (1.5 *wt*.% and 1.5 *wt.*%);
B) inhomogeneous bread with 0.5 cm layer thickness of dough with high/low salt content (2.75 *wt*.% and 0.25 *wt.*%);
A) inhomogeneous bread with 1.0 cm layer thickness of dough with high/low salt content (2.75 *wt.*% and 0.25 *wt.*%).

### Preparation of bread samples

A lean bread recipe was used, composed of Edelweiss flour, tap water, kitchen salt (NaCl) and Fermipan red instant yeast (see table 1.1). Doughs were mixed using Hobart mixers. In this way it was possible to produce multiple doughs with varying salt content at the same time. The 3 bread variations could thus be baked at the same time, allowing comparable sensory testing. Bread with a homogeneous salt distribution is made from dough 1. Breads with heterogeneous salt distribution are 1:1 combinations of dough 2 and 3 (see table 1.1). Thus the average composition of all breads is therefore exactly the same.

**Table 1.1: Dough recipes**

| **Component** | **Dough 1** | **Dough 2** | **Dough 3** |
|---|---|---|---|
| Flour | 1000.0 | 1000.0 | 1000.0 |
| Water | 603.0 | 603.0 | 603.0 |
| Instant yeast | 16.7 | 16.7 | 16.7 |
| NaCl | 15.0 | 2.5 | 27.5 |
| Dough | 1634.7 | 1622.2 | 1647.2 |
| | | | |
| in dough (w/w): | | | |
| Fat % | 0.73 | 0.74 | 0.73 |
| Protein % | 6.58 | 6.63 | 6.53 |
| salt % | 0.92 | 0.15 | 1.67 |

Bread consisting of two dough phases varying in salt concentration was prepared by combining two dough sheets into one bread just before moulding the bread. In all cases the dough sheet with the high salt content was placed outside, inducing a small error in the overall salt content of the crumb. Therefore, the crumb of bread with an inhomogeneous salt distribution contained somewhat less salt.

The doughs containing 1.5 *wt*.% had a final proofing time of 57 min. The breads were baked in closed baking tins. In this way the bread volume is fixed and each slice of bread contained the same overall salt content. The breads were cooled for 1 hour at 20°C before slicing them. Subsequently, half slices of the crumb of the bread were offered to the sensory panel.

### Perceived saltiness

The perceived saltiness of the breads was examined in a randomized, blind ranking test with 5 untrained panellists. A paired comparison test was performed and the panellists were asked to mark which bread was saltier (A:B, B:C, A:C). Samples were offered to the panellists covered, i.e. no visual clues were given to the panellists and dehydration of the samples was prevented. Only the crumb (and not the crust) was evaluated and the panellists were instructed to take large bites of the samples. The results of the sensory test are shown in table 1.2.

**Table 1.2: Results of the sensory test. Each panellist was asked to mark which bread was saltier. A and B are breads with heterogeneous salt distribution and C is bread with a homogeneous salt distribution.**

| | **panellist 1** | **panellist 2** | **panellist 3** | **panellist 4** | **panellist 5** |
|---|---|---|---|---|---|
| **series 1** | | | | | |
| A:B | B | A | B | A | B |
| B:C | B | C | B | B | B |
| A:C | A | C | A | A | A |

The samples with a heterogeneous salt distribution were clearly perceived saltier. From the five panellists, four marked the heterogeneous bread to be saltier.

During preparatory tests the breads were also tasted by people aware of the variation in the samples. The heterogeneous breads were clearly saltier; several peaks of saltiness were perceived during chewing. This phenomenon was also observed after 24 hours of storage and appears to remain after 5 days of frozen storage and 4 hours thawing, indicating that the mobility of the salt is limited and the heterogeneity is remained with time.

### Bread structure

It is well known that the salt content influences the physical properties of bread dough, affecting the bread structure. A paired comparison was done by the sensory panel by means of an open questioning for structural differences of the samples.

All panellists answered that a white spiral was visible in the breads (this is due to the heterogeneous salt distribution). This phenomenon was clearly present for all breads with a heterogeneous salt distribution (see schematic Figures 2a and 2b).

Therefore, the spatial distribution of salt in bread influences the flavour and saltiness perception, more specifically, a heterogeneous distribution of salt in bread seems to increase the perception of saltiness. The invention can be applied in the production of bread with low salt levels without deteriorating the saltiness perception. Likewise, this may apply to other tastants and other food products.

The bread prepared according to an embodiment of the method of the invention may reveal spatial volumes (of larger than about 1 cm³) which are high in salt concentration and volumes which are low in salt concentration. The overall salt concentration of the bread may be significantly lower compared to a bread prepared using standard procedures with a homogeneous salt distribution. The bread prepared according to the invention which exhibits an inhomogeneous distribution of salt may be perceived as saltier than bread prepared according to standard procedure which exhibits a homogeneous distribution of salt at the same salt concentration.

Bread with an inhomogeneous salt distribution can for example be prepared by for instance:
- mixing two dough phases varying in salt concentration following the sheeting process using one dough with a high salt concentration and another dough with a low salt concentration; or
- the "fold in" process where the second dough is added during the final moulding of the dough.

Likewise, this may apply to other tastants and other food products.

### Example 2: Salt perception in bread

### Experimental set up

A bread with an inhomogeneous salt distribution was prepared by placing three layers of dough on top of each other into a tin. The salt concentrations within the layers were 0.5% (bottom layer), 3% (middle layer) and 1% (top layer) resulting in an average salt concentration of 1.5% in the final product. The saltiness perception and morphology of the bread with an inhomogeneous salt distribution (1.5% salt) was compared with a bread with a homogeneous salt distribution (2% salt).

Dough recipes are given in the table 3 below. The doughs were prepared using a spiral mixer for 2+6 minutes at 26°C, followed by 5 minutes rest. Doughs were transferred to the tins (600g per tin). For preparation of the inhomogeneous bread, dough sheets of 2 cm thickness were cut according to tin size. 3 layers of dough were placed on top of each other into the tin; from the bottom up into the tin: 0.5% - 3% - 1%. Doughs were fermented for 45 minutes at 33°C / 80% RH. Then, the breads were baked for 35 min at 240°C.

**Table 2.1: details on Example 2 dough recipes**

| | | **Dough recipes for inhomogeneous salt distribution (1.5% salt)** | | | **Standard bread (2% salt)** |
|---|---|---|---|---|---|
| **Recipe** | **Unit** | **3% Salt** | **1% Salt** | **0.5%Salt** | **2%Salt** |
| Flour | g | 3000 | 3000 | 3000 | 3000 |
| Water | g | 1800 | 1800 | 1800 | 1800 |
| Fresh yeast | g | 90 | 90 | 90 | 90 |
| **Salt** | g | **90** | **30** | **15** | **60** |
| Ascorbic acid | mg | 300 | 300 | 300 | 300 |
| Amylase | mg | 120 | 120 | 120 | 120 |

### Saltines perception and morphology:

The perception of the salty taste of the bread with an inhomogeneous salt distribution (1.5% salt) is similar to that of a bread with a homogeneous salt distribution at a higher salt concentration (2.0% salt). That indicates that the perception of saltiness is enhanced by creating an inhomogeneous distribution of salt.

In the bread with heterogeneous salt distribution, layers differing in thickness were visually observed after baking. The middle layer (3% salt) was the thinnest one. Adaptation of yeast and water dosage, or using different ingredients (emulsifiers, stabilizers, acids, enzymes) can help to overcome this difference in morphology.

Preferably, the ascorbic acid content is in both the first and the second portion substantially the same, and in the range of about 50-100 ppm, such as about 60-80 ppm.

### Example 3: Salt perception in bread

A group of consumers tasted bread samples to evaluate whether an inhomogeneous distribution of salt in bread enhances saltiness perception.

### Samples

### Bread samples were prepared as follows:

A lean bread recipe was used, as shown in table 3.1. Salt reduces the yeast activity. Therefore, the amount of yeast in each dough was compensated to obtain a constant fermentation speed in each dough, independent from the salt concentration.

Dough was mixed using Hobart mixers. After pre-fermentation dough with high and low NaCl content was sheeted through a gap size of 2.5 mm. Four of these dough sheets were stacked with alternating high and low salt content. This dough was cut in two parts, which were again stacked. In this way a sheet of dough consisting of 8 layers of dough with alternating high and low NaCl content was created. From this sheet, rectangular shaped dough pieces of 909 grams were made and put in bread tins.

After a final proofing time of 45 minutes breads were baked in closed baking tins. In this way the bread volume is fixed and each slice of bread contained the same overall salt content. The breads were cooled for 1 hour at 28°C before slicing, packaging and storing at - 20°C.

The bread was thawed at 20°C and left for 24 hours before consumption, to perform the sensory test. Samples were pieces of bread crumb which were cut out of the centre of bread slices. The bread samples were typically spherical discs with a diameter of approx. 40 mm and a thickness of approx. 8 mm. The layer thickness of the layers with the alternating salt weight percentages is between 1 cm and 1.5 cm. As a result, in the heterogeneous sample, each spherical disc comprises at least one layer having a high salt content in contact with another layer having a low(er) salt content.

**Table 3.1: Composition of bread doughs**

| | homogeneous | | | heterogeneous | | |
|---|---|---|---|---|---|---|
| | 1% | 1.5% | 2% | low salt dough | high salt dough | Overall 1.5% |
| Flour | 100 | 100 | 100 | 100 | 100 | 100 |
| Water | 58 | 58 | 58 | 58 | 58 | 58 |
| Instant yeast | 1.43 | 1.69 | 1.99 | 1.24 | 2.70 | 1.97 |
| NaCl | 1.00 | 1.50 | 2.00 | 0.25 | 2.75 | 1.50 |
| Datem | 1 | 1 | 1 | 1 | 1 | 1 |
| Ascorbic acid | 50 ppm | 50 ppm | 50 ppm | 50 ppm | 50 ppm | 50 ppm |

### Sensory evaluation

The consumer panel consisted of 63 naive subjects with no taste or smell defects. The samples were given to the panellists in duplicate in a randomized order. Panellists were asked to rate the saltiness of the sample on a scale from 0-10 (0: not salty; 10: very salty). Before the sensory profiling, the panellists tasted two bread samples with 1% and 2% salt to be familiarized with the anchors of the scale for the evaluations of saltiness perception.

### Results

Bread with a heterogeneous salt distribution is perceived saltier (saltiness score 5.74) than bread with a homogeneous salt distribution (saltiness score 4.98). The difference in saltiness perception is statistically significant at a confidence level <5%. The bread samples had the same total salt content (1.5%) and differed only in the spatial distribution of salt (homogeneous and inhomogeneous).

### Example 4: Tastant inhomogeneity effects in Dutch tin bread

Dutch tin breads with inhomogeneous tastant distributions were compared to breads with homogeneous tastant distributions in a series of directional difference tests (2-AFC (i.e. 2-alternatives forced choice) using a quasi-consumer panel (N=30).

The motivation for these tests was to validate the hypothesis that local taste contrasts evoked by an inhomogeneous distribution of the tastant is easier to notice - compared to a homogeneous distribution - enabling means to reduce the concentration of a tastant whilst maintaining it's original sensory effect. Ribonucleotide-rich yeast extracts containing 28 wt% 5'GMP + 5'IMP and < 22% sodium chloride on dry matter (available from DSM Food Specialties, Delft, the Netherlands as Maxarome® and Maxarite®) were used to amplify the taste contrasts obtained from inhomogeneous distributed salt allowing means to reduce salt whilst maintaining the same saltiness perception levels.

### Samples:

- Inhomogeneous sample :: a random mixture of 3 cubes of 0.5 wt% salt and 3 cubes of 2.5 wt.% salt (NaCl)
- Homogeneous sample:: 6 cubes of 1.5 wt% salt (NaCl)
All samples contained 0.3 wt% yeast extract.

### Protocol

The breads were cut in ∼1.5 cm³ cubes and the samples were prepared according to the table above. For each sample, the cubes were simultaneously loaded on the tongue and chewed and evaluated according to a pre-specified presentation order to balance psychophysiological round and carry-over effects across 30 panellists. The task for the assessor was to identify the sample with the most salty taste (2-AFC-test).

### Results

It was found that 21 of the 30 quasi-consumers (70%) identified the inhomogeneous sample as 'most salty' which is significant (p<0.05). This is an important conclusion, as the untrained quasi-consumer panel is considered as representative for the target consumer population.

### Example 5: Salt perception in cheese

### Example inhomogeneous distribution of salt in cheese

The following samples were made:

**Table 5.1: description of cheese slices and blocks**

| **No** | **Description (7 slices)** | **Salt in moisture** | **Slice thickness** | **Block thickness** |
|---|---|---|---|---|
| #1 | Slices low salt | 0.72 wt.% | 2.54 mm | Not applicable |
| #3 | Slices normal salt | 4.71 wt.% | 2.29 mm | Not applicable |
| | | | | |
| #2 | Reference medium salt | 3.16wt.% | 2.29 mm | 16.0 mm |
| #4 | 1 slice #1 (low salt); 5 slices #3 (normal salt); 1 slice #1 | 3.14 wt.% | | 16.5 mm |
| #5 | 2 slices #3 (normal salt);1 slice #1 (low salt); 1 slice #3, 1 slice #1; 2 slices #3 | 3.14 wt.% | | 16.5 mm |

Cheese samples (blocks) were made by piling seven slices of cheese (see table 1) on top of each other. The reference sample was prepared at medium total salt content by piling seven slices of cheese with the same salt content per slice. By those means samples with a homogeneous salt distribution were obtained.

Sample #4 was obtained by piling one slice with 0.72 wt% salt, five slices with 4.71 wt% salt and one slice with 0.72 wt% salt leading to an inhomogeneous salt distribution at a total salt content of 3.14 wt %. Sample 5 was obtained by piling two slices with 4.71 wt% salt, one slice with 0.72 wt% salt, one slice with 4.71 wt% salt, one slice with 0.72 wt% salt and two slices with 4.71 wt% salt leading to an inhomogeneous salt distribution with a total salt content of 3.14 wt %. The salt contents of samples #2, #4 and #6 were comparable. The size of the inhomogeneity was determined by the thickness of the slices and in the order of millimetres. Salt content in moisture was calculated based on slice thickness and the mean moisture content.

### Salt perception

The piling was performed shortly before the sensory panel judged the cheeses, to prevent diffusion of salt. The piles of slices were cut in 2x2 cm blocks and presented to 11 trained panellists. The panellists tasted samples #2 and #4, respectively #2 and #5 again and were forced to point the more salty sample (paired comparison in duplicate). From 11 panellists, 9 respectively 10 panellists judged the heterogeneous sample to be more salty.

In conclusion, an inhomogeneous distribution of salt in cheese at a scale of millimetres offers an interesting process to decrease the salt content while keeping the salty taste.

### Example 6: confectionery

### Example of inhomogeneous sweet tastant distribution in confectionery

### Experimental set up

To represent gels used in confectionery applications, two gel samples were made consisting of 0.8 wt% agar and 4.0wt% gelatine with a total sucrose content of 10 wt%, but varying in sucrose distribution. The two gel samples each consisted of four gel layers which were put on top of each other immediately before consumption. Variations in sucrose distribution were obtained by assembling four layers varying in sucrose concentration as follows:
A) sample with a homogeneous sucrose distribution with a total sucrose content of 10 wt% consisting of four layers each containing 10 wt% sucrose (10/10/10/10)
B) sample with an inhomogeneous sucrose distribution with a total sucrose content of 10 wt% consisting of four layers containing 15, 5, 15 and 5 wt% sucrose, respectively (15/5/15/5)

### Sample preparation

In triplicate, 1.6 g agar was mixed with 198.4 g water and boiled under stirring to dissolve the agar. 8.33 g gelatine was added to each of the agar solutions under stirring in a beaker. 10, 20 and 30 g sucrose was added to 190, 180 and 170 g of the agar/gelatine solutions, respectively, to obtain solutions containing 0.8 wt% agar, 4.0 wt% gelatine and 5, 10 or 15 wt% sucrose. The sucrose was dissolved under stirring. The warm solutions were poured into plastic Petri dishes to yield samples of 2 mm height. Upon cooling to room temperature, the solutions gelled. The gels were cut into pieces of 20 x 20 mm. The gel pieces were stored overnight in closed Petri dishes in a refrigerator at 4°C. Four pieces of gel were assembled on top of each other to obtain samples of 20 x 20 x 8 mm. The assembly of the four layers was performed immediately before the sensory tests in order to minimize migration of the sucrose from one layer to the other.

### Perceived sweetness

The perceived sweetness of the gel samples was examined in a randomized, two-alternative-forced-choice test with 10 trained panellists in quintuplicate. The panellists were asked to mark which gel sample was sweeter (A or B). Sample B (15/5/15/5) was perceived significantly sweeter compared to sample A (10/10/10/10) at a confidence level ofp<0.02.

In conclusion, the results clearly show that an inhomogeneous distribution of sucrose increases the sweetness perception of gels representative for confectionery applications.

### Example 7: Inhomogeneous distribution of sugars in confectionery articles

### Experimental set-up

### Sample design

Confectionery gel masses of different sugar content corresponding to sugar-free, sugar-reduced and typical sugar content (similar to standard gummy) were prepared (Table 7.1). Prior to depositing, a fraction of each gel mass #1, #2 and #3 was aerated with a beater to achieve a soft aerated texture (Table 7.2: aerated samples A and B). Samples C and D were obtained by direct depositing and drying process in moulding starch of the gel masses (Table 2).

In this example, sugars are sucrose and glucose syrup which are key ingredients in confectionery as far as texture and shelf-life stability are concerned.

**Table 7.1: description of confectionery gel masses:**

| **No** | **Gel mass description** | **Sucrose + glucose syrup content (g/100g)** |
|---|---|---|
| #1 | Sugar-free | 0 |
| #2 | Sugar-reduced (by 50% vs. standard gummy) | 41.5 |
| #3 | Typical sugar content of standard gummy | 83 |

Gummy samples A were obtained by two-step depositing in moulding starch of the gel masses #1 and #3 after aeration, leading to two-layer gummies, with similar layer thickness (6mm), (Table 7.2). Gummy samples B, with a homogeneous sugar distribution, were obtained by two-step depositing of gel mass #2 after aeration. Samples A and B have similar visual properties.

Gummy samples C were obtained by two-step depositing in moulding starch of two layers of gel mass #2 which leads to a homogeneous sugar distribution. Gummy samples D were obtained by two-step depositing of gel masses #1 and #3, leading to an inhomogeneous sugar distribution (Table 7.2). Samples C and D have similar visual properties.

**Table 7.2: Sample description**

| **No** | **Description** | **Sugar distribution in layers (ratio)** | **Layer thickness** | **Density of each layer** |
|---|---|---|---|---|
| A | Aerated Gummy **In**homogeneous distribution | 0/100 | 6 mm of #1 / 6 mm of #3 | 0.8/0.8 |
| B | Aerated Gummy Homogeneous distribution | 50/50 | 6 mm of #2 / 6 mm of #2 | 0.8/0.8 |
| C | Regular Gummy Homogeneous distribution | 50/50 | 6 mm of #2 / 6 mm of #2 | 1.3/1.3 |
| D | Regular Gummy Inhomogeneous distribution | 0/100 | 6 mm of #1 / 6 mm of #3 | 1.3/1.3 |

The distribution of sugars in the confectionery articles has an influence on the texture of final products which may indirectly affect overall sweet perception. Other parameters such as acidity, flavours and crystallization status of sugar, may play also a role in sweetness perception. This work took into account some of those considerations.

### Results: perceived sweetness

Samples A and B were presented to 5 panellists trained to sensory evaluation. They had to indicate which candy was sweeter than the other, A or B. All five panellists pointed out sample A (with inhomogeneous sugar distribution) as being sweeter than sample B.

Samples C and D were presented to 15 untrained panellists. They had to indicate which candy was sweeter than the other, C or D. The order of tasting the candies was randomized. Eleven out of 14 people indicated that candy D (with inhomogeneous sugar distribution) was sweeter than candy C which is significant at a confidence level of p<0.05. One person was unable to make a choice.

Additional remark: Samples were tasted blind and water was provided for rinsing between the samples.

In conclusion, an inhomogeneous distribution of sugars in confectionery articles increases the sweetness perception which offers an interesting process, in confectionery field of application, to decrease the sugar content while keeping the sweet taste.

### Example 8: inhomogeneous distribution of salt in meat sausages

### Samples

**Table 8:1: description of meat samples**

| **No** | **Description** | **wt% salt** | **slice thickness** |
|---|---|---|---|
| # 1 | Low salt | 0.5 % | 1 mm |
| #2 | Medium salt | 2 % | 1 mm |
| #3 | High salt | 3.5 % | 1 mm |

Meat (Lyoner Wurst) samples of different salt content (low, medium and high) were prepared and sliced into samples of 1 mm (table 1). Two meat samples (blocks) were made by piling four slices of meat on top of each other.

A reference sample (A) was prepared by piling four slices of meat with the medium (#2) salt content per slice. By those means samples with a homogeneous salt distribution were obtained.

Sample (B) was obtained by piling one slice with low salt content (#1), one slice with high salt (#3), one slice low salt (#1) and one slice with high salt (#3) leading to an inhomogeneous salt distribution with a total salt content of 2 wt % (similar to the total salt content of the reference sample).

The size of the inhomogeneity was determined by the thickness of the slices and in the order of one millimetre.

### Salt perception

The piling was performed shortly before the sensory panel judged the meat products, to prevent diffusion of salt. The circular piles of slices were cut into quarters resulting in equilateral triangular shaped samples with a side of approx. 2 cm. Samples were presented to 16 naive panellists. Panellists were asked to evaluate the samples (A) and (B). The only instruction give was to eat the pile as a whole (not slice by slice). Water was provided for rinsing between the samples. Afterwards the panellists were forced to point the more salty sample (paired comparison).

From 16 panellists, 13 panellists judged the inhomogeneous sample (B) to be more salty.

In conclusion, an inhomogeneous distribution of salt in meat at a scale of millimetres offers an interesting process to decrease the salt content while keeping the salty taste.

Further, an inhomogenous distribution of tastants in an otherwise substantially homogeneous product appears to provide the advantages that the total amount of tastant can be reduced and/or the tastant perception is stronger than in case the tastant distribution would be homogenous, while additionally the consumer may not perceive inhomogeneities.

The term "substantially" herein, such as in "substantially all emission" or in "substantially consists", will be understood by the person skilled in the art. The term "substantially" may also include embodiments with "entirely", "completely", "all", etc. Hence, in embodiments the adjective substantially may also be removed. Where applicable, the term "substantially" may also relate to 90% or higher, such as 95% or higher, especially 99% or higher, even more especially 99.5% or higher, including 100%. The term "comprise" includes also embodiments wherein the term "comprises" means "consists of". Likewise, the term about may, where applicable, indicate a deviation of 10% or less, or 5% or less, or 1% or less, or 0.5% or less, or even 0.1% or less, and also in an embodiment no (measurable) deviation. As will be clear to the person skilled in the art, small deviations from numerical values may, where applicable, in general be allowed. Hence, except for the values in the definition of about above, numerical values may, where applicable deviate 10% or less, or 5% or less, or 1% or less, or 0.5% or less, or even 0.1 % or less from the given value. To stress this, herein sometimes the word "about" is used before numerical values.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. Use of the verb "to comprise" and its conjugations does not exclude the presence of elements or steps other than those stated in a claim. The article "a" or "an" preceding an element does not exclude the presence of a plurality of such elements. The mere fact that certain measures are recited in mutually different dependent claims does not indicate that a combination of these measures cannot be used to advantage.

## Claims

1. A method for the production of a food product comprising a tastant , wherein the method comprises:
a. combining a first portion of starting materials for making the food product and a second portion of starting materials for making the food product in a weight ratio of 1:20 to 20:1; and
b. preparing the food product,
wherein the first portion of starting materials comprises the tastant with a first portion tastant weight percentage of less than 30 wt.%, wherein the second portion of starting materials optionally comprises the tastant with a second portion tastant weight percentage, and wherein the second portion tastant weight percentage is in the range of 0-75 % of the first portion tastant weight percentage, and wherein the composition of the first portion and the composition of the second portion are identical for at least at least 80 wt.%.

2. The method according to claim 1, wherein the tastant comprises one or more tastants selected from the group consisting of bitter, sweet, sour, salty, kokumi and umami tastants, more especially selected from the group consisting of sugars, sweeteners, salts, taste potentiators and acidulants.

3. The method according to any one of claims 1-2, wherein the weight ratio of the first portion and the second portion of starting materials for making the food product is in the range of 0.01-100, especially 0.1-10.

4. The method according to any one of claims 1-3, wherein the food product comprises a food product selected from the group consisting of bread, baked dough products, baked pastry products, pretzels, crackers, cookies, and biscuit.

5. The method according to any one of claims 1-3, wherein the food product comprises a food product selected from the group consisting of confectionery, nutritional bars, ice creams, mashed potatoes, mashed potato products, snacks, processed cheese, processed meat products, and sausages.

6. The method according to any one of claims 1-4, wherein both the first and the second portion of starting materials comprise a dough, wherein the tastant comprises salt, and wherein preparing the food product comprises baking, cooking or frying the combined doughs.

7. A food product comprising a tastant
, wherein the food product comprises:
a. a first bulk region comprising the tastant, the first bulk region having a first bulk region tastant weight percentage of less than 30 wt.%; and
b. a second bulk region optionally comprising the tastant, the second bulk region having a second bulk region tastant weight percentage,
said first and second bulk region being comprised in the food product in a weight ratio of 0.1-10 and said first and second bulk region together representing more than 90 wt.% of the food product, wherein the second bulk region tastant weight percentage is in the range of 0-75 % of the first bulk region tastant weight percentage, and wherein the first bulk region and the second bulk region each independently have a volume of 1-1000 cm³, and wherein the composition of the first bulk region and the composition of the second bulk region are identical for at least at least 80 wt.%.

8. The food product according to claim 7, wherein the tastant comprises one or more tastants selected from the group consisting of bitter, sweet, sour, salty, kokumi and umami tastants, more especially selected from the group consisting of sugars, sweeteners, salts, taste potentiators and acidulants.

9. The food product according to any one of claims 7-8, wherein the first bulk region, or the second bulk region, or both the first bulk region and the second bulk region have a region location where the length, the height and depth of the region are each independently at least 0.5 mm, more especially each independently at least 1 mm.

10. The food product according to any one of claims 7-9, wherein the weight ratio of the first bulk region and the second bulk region is in the range of 0.01-100, especially 0.1-10.

11. The food product according to any one of claims 7-10, wherein the food product comprises a food product selected from the group consisting of a bread, baked dough products, baked pastry products, pretzels, crackers, a cookie, and a biscuit.

12. The food product according to any one of claims 7-10, wherein the food product comprises a food product selected from the group consisting of confectionery, nutritional bars, ice creams, mashed potatoes, mashed potato products, snacks, processed cheese, processed meat products, and sausages.

13. The food product according to any one of claims 7-11, wherein the food product comprises a bread, wherein the tastant comprises a salt, wherein the ratio of the first bulk region tastant weight percentage and second bulk region tastant weight percentage is in the range of 2-20, and wherein the tastant bulk weight percentage is in the range of 0.1-3, especially 0.5-2 wt.% on bread basis.

## Patentansprüche

1. Verfahren zur Herstellung eines Nahrungsmittels, umfassend einen Geschmacksstoff, wobei das Verfahren umfaßt:
a. Vereinigen eines ersten Teils von Ausgangsmaterialien zur Herstellung des Nahrungsmittels und eines zweiten Teils von Ausgangsmaterialien zur Herstellung des Nahrungsmittels in einem Gewichtsverhältnis von 1:20 bis 20:1 und
b. Herstellen des Nahrungsmittels,
wobei der erste Teil der Ausgangsmaterialien den Geschmacksstoff zu einem Prozentanteil des Gewichts des Geschmacksstoffs des ersten Teils von weniger als 30 Gew.-% umfaßt, wobei der zweite Teil der Ausgangsmaterialien den Geschmacksstoff gegebenenfalls zu einem Prozentanteil des Gewichts des Geschmacksstoffs des zweiten Teils umfaßt, und wobei der Prozentanteil des Gewichts des Geschmacksstoffs des zweiten Teils im Bereich von 0 bis 75% des Prozentanteils des Gewichts des Geschmacksstoffs des ersten Teils liegt, und wobei die Zusammensetzung des ersten Teils und die Zusammensetzung des zweiten Teils zu mindestens 80 Gew.-% identisch sind.

2. Verfahren nach Anspruch 1, wobei der Geschmacksstoff einen oder mehrere Geschmacksstoffe umfaßt, ausgewählt aus der Gruppe, bestehend aus bitteren, süßen, sauren, salzigen, kokumi und umami Geschmacksstoffen, insbesondere ausgewählt aus der Gruppe, bestehend aus Zuckern, Süßstoffen, Salzen, Geschmacksverstärkern und Säuerungsmitteln.

3. Verfahren nach einem der Ansprüche 1 bis 2, wobei das Gewichtsverhältnis des ersten Teils und des zweiten Teils von Ausgangsmaterialien zur Herstellung des Nahrungsmittels im Bereich von 0,01 bis 100, insbesondere 0,1 bis 10, liegt.

4. Verfahren nach einem der Ansprüche 1 bis 3, wobei das Nahrungsmittel ein Nahrungsmittel umfaßt, ausgewählt aus der Gruppe, bestehend aus Brot, gebackenen Teigwaren, gebackenen Gebäckwaren, Brezeln, Crackern, Keksen und Biskuits.

5. Verfahren nach einem der Ansprüche 1 bis 3, wobei das Nahrungsmittel ein Nahrungsmittel umfaßt, ausgewählt aus der Gruppe, bestehend aus Konfekt, Nahrungsriegeln, Eiscremes, Kartoffelpüree, Kartoffelpüreeprodukten, Knabberartikeln, Schmelzkäse, Hackfleischprodukten und Würsten.

6. Verfahren nach einem der Ansprüche 1 bis 4, wobei sowohl der erste als auch der zweite Teil von Ausgangsmaterialien einen Teig umfasst, wobei der Geschmacksstoff Salz umfaßt, und wobei die Herstellung des Nahrungsmittels das Backen, Kochen oder Braten der vereinigten Teige umfaßt.

7. Nahrungsmittel, umfassend einen Geschmacksstoff, wobei das Nahrungsmittel umfaßt:
a. Einen ersten Bulkbereich, umfassend den Geschmacksstoff, wobei der erste Bulkbereich einen Prozentanteil des Gewichts des Geschmacksstoffs des ersten Bulkbereichs von weniger als 30 Gew.-% aufweist und
b. einen zweiten Bulkbereich, der gegebenenfalls den Geschmacksstoff umfaßt, wobei der zweite Bulkbereich einen Prozentanteil des Gewichts des Geschmacksstoffs des zweiten Bulkbereichs aufweist,
wobei der erste und zweite Bulkbereich in dem Nahrungsmittel in einem Gewichtsverhältnis von 0,1 bis 10 umfaßt sind, und der erste und zweite Bulkbereich zusammen mehr als 90 Gew.-% des Nahrungsmittels darstellen, wobei der Prozentanteil des Gewichts des Geschmacksstoffs des zweiten Bulkbereichs im Bereich von 0 bis 75% des Prozentanteils des Gewichts des Geschmacksstoffs des ersten Bulkbereichs liegt, und wobei der erste Bulkbereich und der zweite Bulkbereich unabhängig voneinander ein Volumen von 1 bis 1000 cm³ aufweisen, und wobei die Zusammensetzung des ersten Bulkbereichs und die Zusammensetzung des zweiten Bulkbereichs zu mindestens 80 Gew.-% identisch sind.

8. Nahrungsmittel nach Anspruch 7, wobei der Geschmacksstoff einen oder mehrere Geschmacksstoffe umfaßt, ausgewählt aus der Gruppe, bestehend aus bitteren, süßen, sauren, salzigen, kokumi und umami Geschmacksstoffen, insbesondere ausgewählt aus der Gruppe, bestehend aus Zuckern, Süßstoffen, Salzen, Geschmacksverstärkern und Säuerungsmitteln.

9. Nahrungsmittel nach einem der Ansprüche 7 bis 8, wobei der erste Bulkbereich oder der zweite Bulkbereich oder sowohl der erste Bulkbereich als auch der zweite Bulkbereich eine Bereichslage aufweisen, in der die Länge, die Höhe und Tiefe des Bereichs unabhängig voneinander mindestens 0,5 mm, insbesondere unabhängig voneinander mindestens 1 mm betragen.

10. Nahrungsmittel nach einem der Ansprüche 7 bis 9, wobei das Gewichtsverhältnis des ersten Bulkbereichs und des zweiten Bulkbereichs im Bereich von 0,01 bis 100, insbesondere 0,1 bis 10 liegt.

11. Nahrungsmittel nach einem der Ansprüche 7 bis 10, wobei das Nahrungsmittel ein Nahrungsmittel umfaßt, ausgewählt aus der Gruppe, bestehend aus Brot, gebackenen Teigwaren, gebackenen Gebäckwaren, Brezeln, Crackern, einem Keks und einem Biskuit.

12. Nahrungsmittel nach einem der Ansprüche 7 bis 10, wobei das Nahrungsmittel ein Nahrungsmittel umfaßt, ausgewählt aus der Gruppe, bestehend aus Konfekt, Nahrungsriegeln, Eiscremes, Kartoffelpüree, Kartoffelpüreeprodukten, Knabberwaren, Schmelzkäse, Hackfleischprodukten und Würsten.

13. Nahrungsmittel nach einem der Ansprüche 7 bis 11, wobei das Nahrungsmittel ein Brot umfaßt, wobei der Geschmacksstoff Salz umfaßt, wobei das Verhältnis des Prozentanteils des Gewichts des Geschmacksstoffs des ersten Bulkbereichs und des Prozentanteils des Gewichts des Geschmacksstoffs des zweiten Bulkbereichs im Bereich von 2 bis 20 liegt, und wobei der Prozentanteil des Bulkgewichts des Geschmacksstoffs im Bereich von 0,1 bis 3, insbesondere 0,5 bis 2 Gew.-%, bezogen auf das Brot, liegt.

## Revendications

1. Procédé de production d'un produit alimentaire comprenant un exhausteur de goût, le procédé comprenant :
a. la combinaison d'une première partie de matières premières pour préparer le produit alimentaire et d'une seconde partie de matières premières pour préparer le produit alimentaire à un rapport pondéral de 1 : 20 à 20 : 1 ; et
b. la préparation du produit alimentaire,
dans lequel la première partie de matières premières comprend l'exhausteur de goût avec un pourcentage en poids d'exhausteur de goût dans la première partie inférieur à 30 % en poids, dans lequel la seconde partie de matières premières comprend facultativement l'exhausteur de goût avec un pourcentage en poids d'exhausteur de goût dans la seconde partie, et dans lequel le pourcentage en poids d'exhausteur de goût dans la seconde partie est dans la plage allant de 0 % à 75 % du pourcentage en poids d'exhausteur de goût dans la première partie, et dans lequel la composition de la première partie et la composition de la seconde partie sont identiques à au moins 80 % en poids.

2. Procédé selon la revendication 1, dans lequel l'exhausteur de goût comprend un ou plusieurs exhausteurs de goût choisis dans le groupe constitué par les exhausteurs de goût amers, sucrés, acides, salés, kokumis et umamis, choisis plus particulièrement dans le groupe constitué par les sucres, les édulcorants, les sels, les potentialisateurs de goût et les acidulants.

3. Procédé selon l'une quelconque des revendications 1 et 2, dans lequel le rapport pondéral entre la première partie et la seconde partie de matières premières pour préparer le produit alimentaire est dans la plage allant de 0,01 à 100, en particulier de 0,1 à 10.

4. Procédé selon l'une quelconque des revendications 1 à 3, dans lequel le produit élémentaire comprend un produit alimentaire choisi dans le groupe constitué par le pain, les produits à pâte cuite, les produits de pâtisserie cuits au four, les bretzels, les biscuits salés, un cookie et un biscuit sec.

5. Procédé selon l'une quelconque des revendications 1 à 3, dans lequel le produit alimentaire comprend un produit alimentaire choisi dans le groupe constitué par les confiseries, les barres nutritionnelles, les crèmes glacées, les pommes de terre écrasées, les produits à base de pommes de terre écrasées, les encas, les fromages transformés, les produits à base de viande transformée et les saucisses.

6. Procédé selon l'une quelconque des revendications 1 à 4, dans lequel la première partie et la seconde partie de matières premières comprennent toutes les deux une pâte, dans lequel l'exhausteur de goût comprend un sel et dans lequel la préparation du produit alimentaire comprend la cuisson ou la friture des pâtes combinées.

7. Produit alimentaire comprenant un exhausteur de goût, le produit alimentaire comprenant :
a. Une première région massive comprenant l'exhausteur de goût, la première région massive ayant un pourcentage en poids d'exhausteur de goût de première région massive inférieur à 30 % en poids ; et
b. Une seconde région massive comprenant facultativement l'exhausteur de goût, la seconde région massive ayant un pourcentage en poids d'exhausteur de goût de seconde région massive,
ladite première région massive et ladite seconde région massive étant contenues dans le produit alimentaire à un rapport pondéral allant de 0,1 à 10, ladite première région massive et ladite seconde région massive représentant ensemble plus de 90 % en poids du produit alimentaire, dans lequel le pourcentage en poids d'exhausteur de goût de seconde région massive est dans la plage allant de 0 % à 75 % du pourcentage en poids d'exhausteur de goût de première région massive, et dans lequel la première région massive et la seconde région massive possède chacune indépendamment un volume de 1 cm³ à 1000 cm³, et dans lequel la composition de la première région massive et la composition de la seconde région massive sont identiques à au moins 80 % en poids.

8. Produit alimentaire selon la revendication 7, dans lequel l'exhausteur de goût comprend un ou plusieurs exhausteurs de goût choisis dans le groupe constitué par les exhausteurs de goût amers, sucrés, acides, salés, kokumis et umamis, choisis plus particulièrement dans le groupe constitué par les sucres, les édulcorants, les sels, les potentialisateurs de goût et les acidulants.

9. Produit alimentaire selon l'une quelconque des revendications 7 et 8, dans lequel la première région massive ou la seconde région massive ou à la fois la première région massive et la seconde région massive ont une position de région où la longueur, la hauteur et la profondeur de la région sont chacune indépendamment d'au moins 0,5 mm, plus particulièrement chacune indépendamment d'au moins 1 mm.

10. Produit alimentaire selon l'une quelconque des revendications 7 à 9, dans lequel le rapport pondéral entre la première région massive et la seconde région massive est dans la plage allant de 0,01 à 100, en particulier de 0,1 à 10.

11. Produit alimentaire selon l'une quelconque des revendications 7 à 10, dans lequel le produit alimentaire comprend un produit alimentaire choisi dans le groupe constitué par le pain, les produits à pâte cuite, les produits de pâtisserie cuits au four, les bretzels, les biscuits salés, un cookie et un biscuit.

12. Produit alimentaire selon l'une quelconque des revendications 7 à 10, dans lequel le produit alimentaire comprend un produit alimentaire choisi dans le groupe constitué par les confiseries, les barres nutritionnelles, les crèmes glacées, les pommes de terre écrasées, les produits à base de pommes de terre écrasées, les encas, les fromages transformés, les produits à base de viande transformée et les saucisses.

13. Produit alimentaire selon l'une quelconque des revendications 7 à 11, dans lequel le produit alimentaire comprend un pain, dans lequel l'exhausteur de goût comprend un sel, dans lequel le rapport entre le pourcentage en poids d'exhausteur de goût dans la première région massive et le pourcentage en poids d'exhausteur de goût dans la seconde région massive est dans la plage allant de 2 à 20, et dans lequel le pourcentage en poids de l'exhausteur de goût en vrac est dans la plage allant de 0,1 % en poids à 3 % en poids, en particulier de 0,5 % en poids à 2 % en poids sur la base du pain.
